# EUROPEAN PATENT APPLICATION

(11) **EP 2 784 694 A1**
(43) Date of publication of application: **01.10.2014**
(21) Application number: 11878466.9
(22) Date of filing: 28.12.2011
(51) Int. Cl.: G06F 17/30

(54) **SEARCH DEVICE, SEARCHING METHOD, SEARCH PROGRAM AND RECORDING MEDIUM**

(71) Applicant: Rakuten, Inc., Tokyo 140-0002 (JP)
(72) Inventor: YOSHIOKA Takumi, Tokyo 140-0002 (JP)
(74) Representative: EIP
(86) International application number: PCT/JP2011/080436
(87) International publication number: WO 2013/099002

(57) **Abstract**

A user is enabled to obtain search results desired by the user without changing a search condition even when a sufficient number of search objects do not exist which match all of a plurality of keywords specified as a search condition. A search apparatus divides a plurality of keywords specified as a search condition into two child search conditions, each of which includes at least one keyword. The search apparatus searches for a search object that matches all the keywords specified as the search condition. The search apparatus searches for search objects that match all the keywords included in one of the child search conditions and search objects that match all the keywords included in the other of the child search conditions. The search apparatus extracts combinations of search objects having predetermined relationship to each other from among combinations of any one of search objects found by the one of the child search conditions and any one of search objects found by the other of the child search conditions.

## Description

### Technical Field

The present invention relates to a technical field of a search apparatus and a search method which performs a search based on a plurality of keywords specified as a search condition.

### Background Art

Conventionally, search apparatus are known which perform a search based on a keyword specified by a user. Examples of objects to be searched for include an item for sales, a service, a web page, and other information. When a user specifies a plurality of keywords, a search apparatus generally searches for a search object that matches all the specified keywords. Accordingly, the number of search object tends to be smaller when the plurality of keywords are specified than when only one keyword is specified. Therefore, when the user specifies a plurality of keywords, there is a case in which the user cannot obtain a sufficient number of search results desired by the user.

In regard to that point, techniques are known which perform search while excluding a part of a plurality of keywords. For example, Patent Literature 1 discloses a technique which extracts keywords from a text input by a user, deletes from the extracted keywords a keyword which provides a condition that is unnecessarily strict and set a conditional expression for search. Patent Literature 1 further discloses add a new keyword that substitutes for the deleted keyword and set a conditional expression.

### Citation List

### Patent Literature

Patent Literature 1: JP 2002-92033 A

### Summary of Invention

### Technical Problem

However, when a part of the plurality of keywords is excluded, a condition to be used for search becomes deferent from an original condition. Therefore, search objects may be found which the user does not desire. Further, even if a new keyword is added instead of the keyword which has been excluded, the new keyword and the excluded keyword are not the same. Therefore, search objects may be found which the user does not desire.

The present invention is made in view of the above situation, and an object of the present invention is to provide a search apparatus, a search method, a search program, and a recording medium which enable a user to obtain search results desired by the user without changing a search condition even when a sufficient number of search objects do not exist which match all of a plurality of keywords specified as a search condition.

### Solution to Problem

In order to solve the above problem, the invention according to claim 1 is a search apparatus comprising: a dividing means that divides a plurality of keywords specified as a search condition into two child search conditions, each of the child search conditions including at least one keyword; a search means that searches for search objects matching all of the keywords included in a child search condition for each of the child search conditions; and an extraction means that extracts combinations of search objects having a predetermined relationship to each other from among combinations of any one of search objects found by one of the child search conditions and any one of search objects found by the other of the child search conditions.

According to the invention, for any keyword of the plurality of keywords, there is a search object that matches the specified keyword in a plurality of search objects included in the extracted combinations. The extracted combination is a combination of search objects related to each other. Therefore, a user can obtain search results desired by the user without changing a search condition even when a sufficient number of search objects do not exist which match all of a plurality of keywords specified as a search condition.

A case of dividing the plurality of keywords specified as the search condition into three or more child search conditions belongs to a technical scope of the present invention. For example, it is assumed that five keywords of a, b, c, d, and e are specified. Here, the five keywords are divided into a child search condition including a and b, a child search condition including c and d, and a child search condition including e. In this case, for example, a, b, c, and d, which are part of the five keywords, are also a plurality of keywords specified as a search condition. A plurality of keywords of a, b, c, and d are divided into two child search conditions. In other words, the process of dividing a plurality of keywords into three or more child search conditions includes a process of dividing a plurality of keywords into two child search conditions.

The invention according to claim 2 is the search apparatus according to claim 1, wherein the dividing means divides the plurality of keywords when a result of searching for search objects matching all of the plurality of keywords is that a number of search objects found is smaller than a predetermined first number.

According to the invention, it is possible to prevent an unnecessary search process from being performed while the user can obtain the search result more desirable for the user.

The invention according to claim 3 is the search apparatus according to claim 1 or 2, wherein the dividing means divides the one of the child search conditions into two grandchild search conditions when a number of search objects found by using the one of the child search conditions is smaller than a predetermined second number, the search means searches for search objects matching all of the keywords included in a grandchild search condition for each of the grandchild search conditions, and the extraction means extracts combinations of search objects having a predetermined relationship to each other from among combinations of any one of search objects found by using one of the grandchild search conditions, any one of search objects found by the other of the grandchild search conditions, and any one of search objects found by the other of the child search conditions.

According to the invention, even when the number of search objects found by one child search condition is smaller than a second number, the one child search condition is divided into two grandchild search conditions and a search is performed with each of the grandchild search conditions. The number of keywords included in a grandchild search condition is smaller than that of keywords included in the one child search condition, so that there is a higher probability of finding search objects when performing a search by using the grandchild search condition than when performing a search by using the child search condition. Therefore, it is possible to more easily obtain a search result desired by the user.

A case of dividing a child search condition into three or more grandchild conditions belongs to a technical scope of the present invention because of the same reason described in the case of dividing the plurality of keywords specified as a search condition into three or more child search conditions.

The invention according to claim 4 is the search apparatus according to claim 1 or 2, wherein the dividing means divides the one of the child search conditions into two grandchild search conditions and integrates one of the grandchild search conditions with the other of the child search conditions when a number of search objects found by the one of the child search conditions is smaller than a predetermined second number, the search means searches for search objects matching all of the keywords included in the other of the grandchild search conditions and search objects matching all of the keywords included in the other of the child search conditions, and the extraction means extracts combinations of search objects having a predetermined relationship to each other from among combinations of any one of search objects found by the other of the grandchild search conditions and any one of search objects found by the other of the child search conditions.

According to the invention, when the number of search objects found by one child search condition is smaller than a second number, the one child search condition is divided into two grandchild search conditions and one of the grandchild search conditions is integrated with the other child search condition. The number of keywords included in a grandchild search condition is smaller than that of keywords included in the one child search condition, so that there is a higher probability of finding search objects when performing a search by using the grandchild search condition than when performing a search by using the child search condition. Therefore, it is possible to more easily obtain a search result desired by the user without increasing the number of search objects included in the extracted combinations.

The invention according to claim 5 is the search apparatus according to any one of claims 1 to 4, wherein the dividing means includes one keyword by which the smallest number of search objects are found among the plurality of keywords in the other of the child search conditions and includes the keywords that are not included in the other of the child search conditions in the one of the child search conditions.

According to the invention, the one child search condition is formed by removing one keyword from the specified search condition. The keyword removed from the one child search condition is a keyword by which the smallest number of search objects are found. Therefore, it is possible to make the one child search condition closer to the specified search condition as much as possible and increase the probability to be able to find search objects by the one child search condition.

The invention according to claim 6 is the search apparatus according to any one of claims 1 to 5, wherein the dividing means divides the plurality of keywords specified for searching for facilities into a first child search condition that is used for searching for facilities and a second child search condition that is not used for searching for facilities, the search means searches for facilities matching all of the keywords included in the first child search condition and regions matching all of the keywords included in the second child search condition, and the extraction means extracts combinations of a facility and a region that have the relationship to each other from among combinations of any one of facilities found by the first child search condition and any one of regions found by the second child search condition.

According to the invention, a user can obtain results desired by the user as combinations of a facility and a region even when a sufficient number of facilities do not exist which match all of a plurality of keywords.

The invention according to claim 7 is the search apparatus according to claim 6, wherein the dividing means determines for each of the plurality of keywords whether or not the keyword is a keyword related to a provision object that is provided by a facility, includes a keyword determined to be related to the provision object in the first search child condition and includes a keyword determined not to be related to the provision object in the second search child condition.

According to the invention, a user can obtain a combination including facility that provides a provision object desired by the user.

The invention according to claim 8 is the search apparatus according to claim 6 or 7, wherein when a location of any facility of facilities found by the first child search condition is within a predetermined range with respect to any region of regions found by the second child search condition, the extraction means extracts the facility and the region as a combination of a facility and a region that have the relationship to each other.

According to the invention, since a facility included in a combination that is extracted is within a predetermined range from a region included in the combination, a user can obtain a combination of a facility and a region to both of which the user easily go in the same period of time.

The invention according to claim 9 is the search apparatus according to any one of claims 6 to 8, further comprising change means that, when a number of regions found by the second child search condition is smaller than a predetermined third number, makes sizes of regions, to be searched, larger than when the regions the number of which is smaller than the third number was found, wherein the search means searches regions whose sizes are changed by the change means for regions matching all of the keywords included in the second child search condition, and the extraction means extracts combinations of a facility and a region that have the relationship to each other from among combinations of any one of facilities found by the first child search condition and any one of regions found by the second child search condition from among regions whose sizes are changed by the change means.

According to the invention, since sizes of regions which are searched for become larger when the number of regions which have been found is smaller than the third number, a probability of finding regions matching all of the keywords included in the second child condition. Therefore, a user can more easily obtain the search results desired by the user.

The invention according to claim 10 is a search method performed by a search apparatus, the search method comprising: a dividing step of dividing a plurality of keywords specified as a search condition into two child search conditions, each of the child search conditions including at least one keyword; a search step of searching for search objects matching all of the keywords included in a child search condition for each of the child search conditions; and an extraction step of extracting combinations of search objects having a predetermined relationship to each other from among combinations of any one of search objects found by one of the child search conditions and any one of search objects found by the other of the child search conditions.

The invention according to claim 11 is a search program that causes a computer included in a search apparatus to function as: a dividing means that divides a plurality of keywords specified as a search condition into two child search conditions, each of the child search conditions including at least one keyword; a search means that searches for search objects matching all of the keywords included in a child search condition for each of the child search conditions; and an extraction means that extracts combinations of search objects having a predetermined relationship to each other from among combinations of any one of search objects found by one of the child search conditions and any one of search objects found by the other of the child search conditions.

The invention according to claim 12 is a recording medium in which a search program is computer-readably recorded, the search program causing a computer included in a search apparatus to function as: a dividing means that divides a plurality of keywords specified as a search condition into two child search conditions, each of the child search conditions including at least one keyword; a search means that searches for search objects matching all of the keywords included in a child search condition for each of the child search conditions; and an extraction means that extracts combinations of search objects having a predetermined relationship to each other from among combinations of any one of search objects found by one of the child search conditions and any one of search objects found by the other of the child search conditions.

### Advantageous Effect of Invention

According to the present invention, for any keyword of the plurality of keywords, there is a search object that matches the specified keyword in a plurality of search objects included in the extracted combinations. The extracted combination is a combination of search objects related to each other. Therefore, a user can obtain search results desired by the user without changing a search condition even when a sufficient number of search objects do not exist which match all of a plurality of keywords specified as a search condition. Brief Description of Drawings

FIG. 1 is a diagram showing an example of a schematic configuration of an information providing system S1 according to an embodiment.
FIG. 2A is a diagram showing a search example of a combination of an accommodation facility and a region. FIG. 2B is a diagram showing a change example of an accommodation facility search condition and a region search condition.
FIG. 3 is a diagram showing a display example of a search result page.
FIG. 4 is a block diagram showing an example of a schematic configuration of an accommodation facility reservation server 1 according to an embodiment.
FIG. 5A is a diagram showing an example of content registered in a member information DB 12a. FIG. 5B is a diagram showing an example of content registered in an accommodation facility information DB 12b. FIG. 5C is a diagram showing an example of content registered in a regional information DB 12c. FIG. 5D is a diagram showing an example of content registered in a spot information DB 12d. FIG. 5E is a diagram showing an example of content registered in an accommodation facility keyword information DB 12e.
FIG. 6 is a flowchart showing a process example of a search process of a system control unit 14 of the accommodation facility reservation server 1 according to an embodiment.
FIG. 7 is a flowchart showing a process example of an accommodation facility search process of the system control unit 14 of the accommodation facility reservation server 1 according to an embodiment.
FIG. 8 is a flowchart showing a process example of a region search process of the system control unit 14 of the accommodation facility reservation server 1 according to an embodiment.
FIG. 9 is a diagram showing an example of a schematic configuration of an information providing system S2 according to an embodiment.
FIG. 10A is a diagram showing a search example of an item for sale. FIG. 10B is a diagram showing a division example of a partial search condition 1.
FIG. 11 is a diagram showing a display example of a sale item search result page.
FIG. 12 is a block diagram showing an example of a schematic configuration of an online shopping mall server 4 according to an embodiment.
FIG. 13A is a diagram showing an example of content registered in a member information DB 42a. FIG. 13B is a diagram showing an example of content registered in a category information DB 42b. FIG. 13C is a diagram showing an example of content registered in a shop information DB 42c. FIG. 13D is a diagram showing an example of content registered in a sale item information DB 42d. FIG. 13E is a diagram showing an example of content registered in a related sale item information DB 42d.
FIG. 14 is a flowchart showing a process example of a search process of a system control unit 44 of the online shopping mall server 4 according to an embodiment.

### Description of Embodiments

Hereinafter, embodiments of the present invention will be described in detail with reference to the drawings.

### 1. First Embodiment

The first embodiment described below is an embodiment where the present invention is applied to an information providing system for making a reservation for an accommodation facility.

### 1-1. Schematic Configuration and Function of Information Providing System

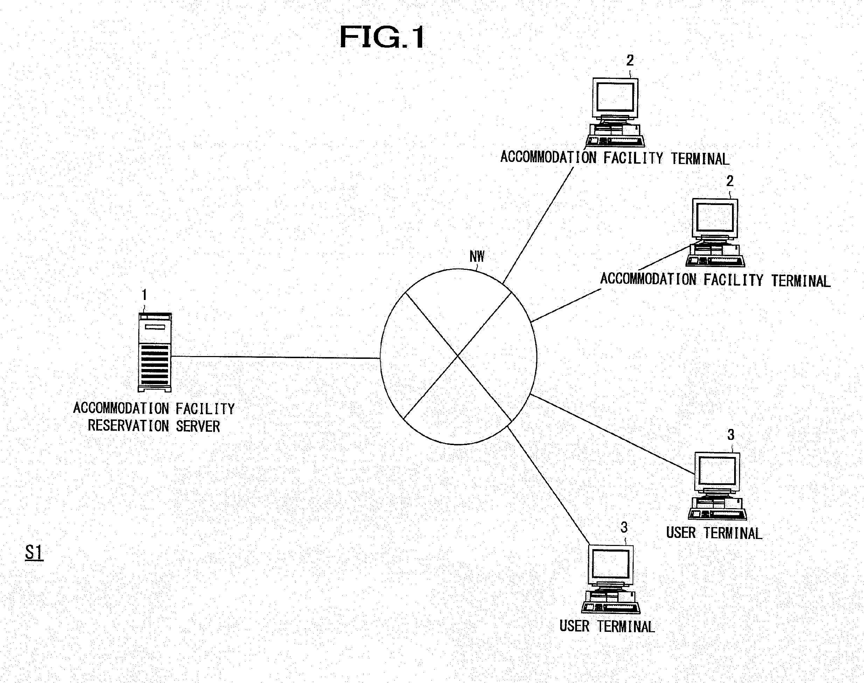

First, a configuration of an information providing system S1 according to the present embodiment will be described with reference to FIG. 1. FIG. 1 is a diagram showing an example of a schematic configuration of the information providing system S1 according to the present embodiment.

As shown in FIG. 1, the information providing system S1 includes an accommodation facility reservation server 1, a plurality of accommodation facility terminals 2, and a plurality of user terminals 3. The accommodation facility reservation server 1, each accommodation facility terminal 2, and each user terminal 3 can transmit and receive data to and from each other through a network NW by using, for example, TCP/IP as a communication protocol. The network NW includes, for example, the Internet, a dedicated communication line (for example, a CATV (Community Antenna Television) line), a mobile communication network (including a base station and the like), and a gateway.

The accommodation facility reservation server 1 is a server device that performs various processes related to an accommodation facility reservation site. The accommodation facility reservation server 1 is an example of a search apparatus of the present invention. The accommodation facility reservation site is a web site that receives reservations for staying in accommodation facilities. The accommodation facility reservation site is entrusted with reservation acceptance by a plurality of accommodation facilities. For example, the accommodation facility reservation server 1 transmits a web page of the accommodation facility reservation site and performs processes related to a search for an accommodation facility and a reservation for accommodation, according to a request from the user terminal 3. The accommodation facility is an example of a search object of the present invention.

The accommodation facility terminal 2 is a terminal device used by an employee or the like of an accommodation facility that entrusts the accommodation facility reservation site with reservations. The accommodation facility terminal 2 accesses a server device such as the accommodation facility reservation server 1 on the basis of an operation from an employee or the like. Thereby, the accommodation facility terminal 2 receives a web page from the server device and displays the web page. In the accommodation facility terminal 2, software such as a browser and an email client is installed. For example, an employee registers information of the accommodation facility in the accommodation facility reservation site and checks a reservation state of the accommodation facility by using the accommodation facility terminal 2.

The user terminal 3 is a terminal device of a user who uses the accommodation facility reservation site. The user terminal 3 receives a web page from the accommodation facility reservation server 1 and displays the web page by accessing the accommodation facility reservation server 1 on the basis of an operation from the user. In the user terminal 3, software such as a browser and an email client is installed. For example, a personal computer, a PDA (Personal Digital Assistant), a mobile information terminal such as a smartphone, and a mobile phone are used as the user terminal 3.

In the accommodation facility reservation site, the user can specify a search condition to search for an accommodation facility to be used by the user. For example, it is possible to specify keywords as a search condition. For example, the user inputs as a keyword a word that concisely represents a condition of an accommodation facility desired by the user. When the search condition is specified, the accommodation facility reservation server 1 searches for accommodation facilities that satisfy the search condition. Specifically, the accommodation facility reservation server 1 searches for accommodation facilities where the specified keyword is included in a name of the accommodation facility and/or detailed information of the accommodation facility. Then, the accommodation facility reservation server 1 transmits a search result page to the user terminal 3.

The search result page is a web page on which a list of found accommodation facilities is displayed. For example, on the search result page, information such as an accommodation facility name, an image of the accommodation facility, a brief description of the accommodation facility, and an accommodation plan is displayed for each accommodation facility. The accommodation plan is, for example, an accommodation service planned by an accommodation facility. A plurality of pieces of information of accommodation plans may be displayed for one accommodation facility. Further, a hyperlink (hereinafter referred to as a "link") to an accommodation facility page of the found accommodation facility is embedded in the search result page. The accommodation facility page is a web page on which information related to one accommodation facility is displayed. There are a plurality types of web pages for each accommodation facility. For example, there are a top page of an accommodation facility, a web page on which detailed information of the accommodation facility is displayed, and a web page on which a list of accommodation plans is displayed. A user can make a reservation for an accommodation facility by performing a reservation operation on the accommodation facility page.

### 1-2. Division of a Plurality of Keywords Specified

A user may have a plurality of conditions requested for accommodation facilities which the user wants to search for. For example, the conditions include a service which the user wants to be provided from the accommodation facility, equipment which the user wants to use, a thing which the user wants to do. The service and the facility are examples of a provision object which is provided to the user in the present invention. Further, a service, equipment, and a place which realize a thing which the user wants to do are examples of the provision object in the present invention. When the user inputs a keyword related to a condition for each condition to be requested, a plurality of keywords are specified as a search condition. When a plurality of keywords are specified, the accommodation facility reservation server 1 searches for accommodation facilities that match all the specified keywords. Therefore, the greater the number of specified keywords, the smaller the number of accommodation facilities that match all the keywords or the lower the probability that there is an accommodation facility that matches all the keywords. So, there is a case in which the user cannot obtain a sufficient number of search results desired by the user.

The user can reduce the number of specified keywords and request the accommodation facility reservation server 1 to perform the search again when the user cannot obtain a sufficient number of desired search results. In other words, the user specifies a search condition again by excluding some keywords from a plurality of keywords specified first. Or, it can be considered that the accommodation facility reservation server 1 automatically reduces the keywords and performs the search again. However, in this case, the search condition specified first and the newly specified condition are not the same. Therefore, there is a case in which the user cannot obtain a desired result. There is a high probability that an accommodation facility that satisfies all conditions desired first by the user is not included in the accommodation facilities found by the new search condition.

Therefore, the accommodation facility reservation server 1 searches for combinations that match all the keywords specified by the user on condition that an accommodation facility and a region are combined. Then, the accommodation facility reservation server 1 causes the user terminal 3 to present a found combination to the user as a search result.

Specifically, the accommodation facility reservation server 1 divides a plurality of keywords specified as a search condition into two search conditions, each of which includes at least one keyword. One of the two search conditions is an accommodation facility search condition. The accommodation facility search condition is a search condition that is used to search for accommodation facilities. The accommodation facility search condition is an example of a first child search condition in the present invention. The other condition of the two search conditions is a region search condition. The region search condition is a search condition that is not used to search for accommodation facilities. Instead, the region search condition is used to search for regions. The region search condition is an example of a second child search condition in the present invention. The accommodation facility reservation server 1 searches for accommodation facilities that satisfy the accommodation facility search condition and searches for regions that satisfy the region search condition. Then, the accommodation facility reservation server 1 extracts combinations of an accommodation facility and a region that are related to each other from among combinations of any one of found accommodation facilities and any one of found regions. Here, the accommodation facility reservation server 1 determines that an accommodation facility and a region are related to each other if a position at which the accommodation facility is located is within a predetermined range with respect to the region. The region is an example of the search object of the present invention.

If there is an object represented by a certain keyword or a spot that provides an object related to the keyword near an accommodation facility, it can be considered that the accommodation facility need not be able to provide the object. This is because the user can satisfy a request of the user by going to the spot when using the accommodation facility. Each region has a spot that may satisfy a request of the user. Therefore, a combination of an accommodation facility and a region, in which the accommodation facility satisfies an accommodation facility search condition including a part of a plurality of keywords specified by the user and the region satisfies a region search condition including the other keywords, satisfies the request of the user as a whole.

In addition, the accommodation facility reservation server 1 at first searches for accommodation facilities matching all of the plurality of keywords specified by the user. Then, the accommodation facility reservation server 1 searches for combinations of an accommodation facility and a region when the number of found accommodation facilities is smaller than a threshold value. The reason of this is that when a certain number of accommodation facilities satisfying all of demands of the user, the combinations of an accommodation facility and a region need not be searched for. Thereby, it is possible to prevent the accommodation facility reservation server 1 from performing an unnecessary search process. Further, it is more convenient for the user that one accommodation facility satisfies demands of the user than that a combination of an accommodation facility and a region satisfies demands of the user. The reason of this is that the user need not go various places in order to satisfy demands of the user. The threshold value used in this case is defined as T1. T1 is an example of a first number in the present invention.

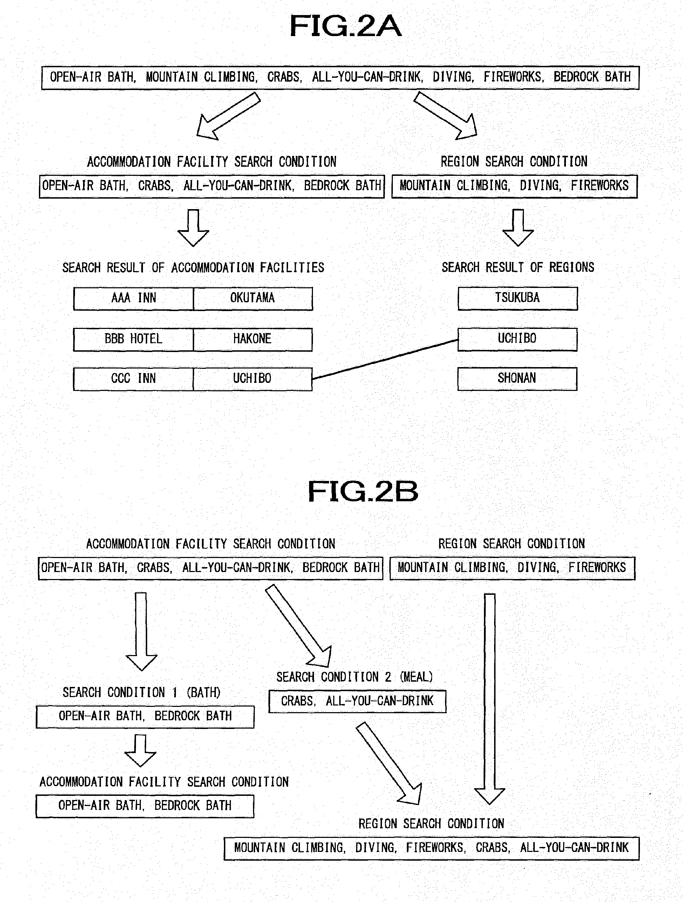

FIG. 2A is a diagram showing a search example of a combination of an accommodation facility and a region. The accommodation facility reservation server 1 divides a plurality of keywords specified by the user into the accommodation facility search condition and the region search condition. A criterion of the division is, for example, whether or not a keyword is related to an object that can be provided by an accommodation facility. In other words, the accommodation facility reservation server 1 classifies a plurality of keywords into keywords related to an object that is provided by an accommodation facility and keywords related to an object that is not provided by an accommodation facility.

For example, it is assumed that the user wants to use an open-air bath and a bedrock bath and wants to enjoy mountain climbing, diving, and fireworks. Further, it is assumed that the user wants to eat crabs and wants to have a meal with all-you-can-drink. Therefore, as shown in FIG. 2A, the user specifies "open-air bath, mountain climbing, crabs, all-you-can-drink, diving, fireworks, bedrock bath" as a plurality of keywords. Each group of words separated by commas is a keyword. Then, the plurality of keywords are divided into the accommodation facility search condition including "open-air bath, crabs, all-you-can-drink, bedrock bath" and the region search condition including "mountain climbing, diving, fireworks". The objects represented by the keywords included in the "open-air bath, crabs, all-you-can-drink, bedrock bath" are objects that can be provided by an accommodation facility. On the other hand, the objects represented by the keywords included in the "mountain climbing, diving, fireworks" are objects that are not generally provided by an accommodation facility.

Next, the accommodation facility reservation server 1 searches for accommodation facilities that match all the keywords included in the accommodation facility search condition and searches for regions that match all the keywords included in the region search condition. A set that contains found accommodation facilities as its elements is referred to as a "corresponding accommodation facility set". A set that contains found regions as its elements is referred to as a "corresponding region set". The accommodation facility reservation server 1 extracts combinations of an accommodation facility and a region that are related to each other from the corresponding accommodation facility set and the corresponding region set.

A criterion whether or not an accommodation facility and a region are related to each other is whether or not a position at which an accommodation facility A is located is within a predetermined range with respect to a region B. For example, the range is defined as a range in which the user can go to the region B from the accommodation facility A while traveling at a traveling destination. For example, the accommodation facility reservation server 1 determines that a region where an accommodation facility is located is a region related to the accommodation facility. The accommodation facility reservation server 1 may extend the region related to the accommodation facility to a region adjacent to the region where the accommodation facility is located. The accommodation facility reservation server 1 may extend the region related to the accommodation facility to a region near the region where the accommodation facility is located. The accommodation facility reservation server 1 may determine that a region within a range of a predetermined distance from the position at which the accommodation facility is located is the region related to the accommodation facility.

For example, as shown in FIG. 2A, it is assumed that an AAA inn, a BBB hotel, and a CCC inn are found as accommodation facilities that match the "open-air bath, crabs, all-you-can-drink, bedrock bath" There is a probability that each of these accommodation facilities can provide an open-air bath, crabs, all-you-can-drink, and a bedrock bath. The AAA inn is located in Okutama. The BBB hotel is located in Hakone. The CCC inn is located in Uchibo. On the other hand, it is assumed that Tsukuba, Uchibo, and Shonan are found as regions that match the "mountain climbing, diving, fireworks". There is a probability that there are spots at which mountain climbing, diving, and fireworks are provided respectively in each of these regions. Okutama, Hakone, Uchibo, Tsukuba, and Shonan are regions that are not adjacent to each other. Further, it is determined that these regions are not near to each other.

In this case, the CCC inn is located in Uchibo that is one of the found regions. Therefore, as a search result, a combination of the CCC inn and Uchibo is extracted.

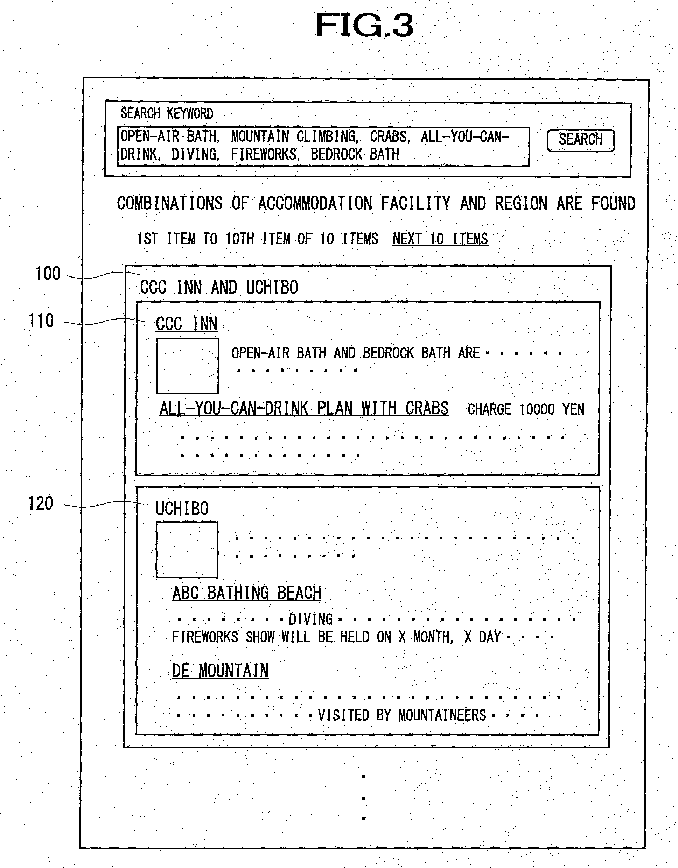

FIG. 3 is a diagram showing a display example of a search result page. When combinations of an accommodation facility and a region are found, a search result page are displayed, for example as shown in FIG. 3. In the search result page, combination display areas 100 are displayed. The combination display area 100 is displayed for each of found combinations : FIG. 3 is a display example of a combination display area 100 corresponding to a combination of CCC inn and Uchibo. In the combination display area 100, an accommodation facility information display area 110 and a region information display area 120 are displayed.

In the accommodation facility information display area 110, information related to the accommodation facility included in one combination is displayed. Specifically, in the accommodation facility information display area 110, for example, an accommodation facility name, an image of the accommodation facility, an introduction of the accommodation facility, an access method to the accommodation facility, an address of the accommodation facility, information of accommodation plan, and the like are displayed. As the information of accommodation plan, for example, a name of the accommodation plan, a part of the description of the accommodation plan, the accommodation charge, and the like are displayed. The accommodation plan for which information is displayed is, for example, an accommodation plan corresponding to a keyword specified by the user. The accommodation facility information display area 110 shown in FIG. 3 displays that the CCC inn has facilities of an open-air bath and a bedrock bath. Further, the accommodation facility information display area 110 shown in FIG. 3 displays information of an accommodation plan in which crabs are included in a dish served as a meal and the drinks are all-you-can-drink. When the user selects an accommodation facility name, the top page of the accommodation facility is displayed on a screen. When the user selects a name of an accommodation plan, a web page of a list of accommodation plans is displayed on the screen.

In the region information display area 120, information related to a region included in one combination is displayed. Specifically, in the region information display area 120, for example, a region name, an image of the region, an introduction of the region, information of a spot located in the region, and the like are displayed. As the information of a spot, for example, a spot name, a description of the spot, and the like are displayed. Examples of the spots include a famous place, a tourist attraction, and a facility. A spot for which information is displayed is, for example, a spot corresponding to a keyword specified by the user. In the region information display area 120 shown in FIG. 3, as the information of the spot, information of a bathing beach where diving can be performed and a fireworks show is held and information of a mountain where mountain climbing can be performed are displayed. When the user selects a region name, a region information page is displayed on the screen. The region information page is a web page on which information related to one region is displayed. When the user selects a name of a spot, a spot information page is displayed on the screen. The spot information page is a web page on which information related to one spot is displayed.

In this way, in the search result page, combinations that match all the keywords specified by the user are displayed as a search result. In the search result page, information indicating what keywords are used to search for accommodation facilities and what keywords are used to search for regions may be displayed.

By the way, even if a plurality of keywords are divided into the accommodation facility search condition and the region search condition and a search is performed, a search result desired by the user may not be obtained. Therefore, the accommodation facility reservation server 1 performs a search process so that a search result desired by the user is obtained.

As a first process for obtaining a search result desired by the user, the accommodation facility reservation server 1 determines whether or not the number of accommodation facilities found by using the accommodation facility search condition is smaller than a threshold value. When the number of the found accommodation facilities is smaller than the threshold value, the accommodation facility reservation server 1 divides the accommodation facility search condition into a search condition 1 and a search condition 2. Each of the search condition 1 and the search condition 2 includes at least one keyword. The search condition 1 and the search condition 2 are examples of a grandchild search condition of the present invention. Then, the accommodation facility reservation server 1 determines the search condition 1 to be the accommodation facility search condition and integrates the search condition 2 with the region search condition. The reason why the number of keywords for accommodation facilities is reduced and the number of keywords for regions is increased is that there is a case in which a probability that a search result desired by the user is obtained increases. Generally, there is a plurality of spots in one region. Therefore, a probability that a region including a plurality of spots that may satisfy the search condition satisfies the search condition may be higher than a probability that one accommodation facility satisfies the search condition. The reason of integrating the search conditions is not to increase search conditions. If the search conditions increase, the number of accommodation facilities or regions included in a combination that is searched for increases. It is convenient for the user if the number of accommodation facilities and regions included in a combination is small. The reason why the determination is performed by using the threshold value is that when the number of the found accommodation facilities is small, a probability that a combination of an accommodation facility and a region related to each other is extracted from among the found accommodation facilities and regions is low. The threshold value used in this case is defined as T2. T2 is an example of a second number in the present invention.

FIG. 2B is a diagram showing a change example of the accommodation facility search condition and the region search condition. The accommodation facility reservation server 1 divides the accommodation facility search condition into the search condition 1 and the search condition 2 according to types of objects related to the keywords. For example, the search condition 1 includes keywords related to a bath. For example, the search condition 2 includes keywords related to a meal. The reason why the keywords are divided by the types of objects provided to the user is that, for example, it is considered that there is an appropriate location for each type of object. Or, it is considered that if a plurality of objects belonging to the same type are provided at the same location, it is convenient for the user.

For example, as shown in FIG. 2B, "open-air bath, crabs, all-you-can-drink, bedrock bath" is divided into the search condition 1 "open-air bath, bedrock bath" and the search condition 2 "crabs, all-you-can-drink". The search condition 1 is a new accommodation facility search condition. The accommodation facility reservation server 1 searches for accommodation facilities that match all the keywords included in the new accommodation facility search condition. On the other hand, the search condition 2 is integrated with the region search condition. Then, the region search condition becomes "mountain climbing, diving, fireworks, crabs, all-you-can-drink". The accommodation facility reservation server 1 searches for regions that match all the keywords included in the new region search condition. Then, the accommodation facility reservation server 1 extracts combinations of an accommodation facility and a region that are related to each other from the accommodation facilities and the regions that are newly found.

However, the accommodation facility reservation server 1 determines whether or not the number of the accommodation facilities found by using the new accommodation facility search condition is greater than or equal to a threshold value, and only when the number of the accommodation facilities is greater than or equal to the threshold value, the accommodation facility reservation server 1 adds the search condition 2 to the region search condition. The reason why the determination is performed is the same as the reason why the determination is performed by using T2. The threshold value used in this case is defined as T3. In this case, the accommodation facility reservation server 1 uses the search condition 2 as a new accommodation facility search condition. When the number of accommodation facilities found by using the new accommodation facility search condition is greater than or equal to T3, the accommodation facility reservation server 1 integrates the search condition 1 with the region search condition. At this time, when the number of the found accommodation facilities is smaller than T3, any process can be performed. For example, the accommodation facility reservation server 1 may transmit a search result page displaying that there is no corresponding accommodation facility to the user terminal 3.

As a second process for obtaining a search result desired by the user, when the number of regions found by using the region search condition is smaller than a threshold value, the accommodation facility reservation server 1 changes a region to be searched to a region larger than an area of a region that has been used as a region to be searched for. Then, the accommodation facility reservation server 1 searches for regions that match all the keywords included in the region search condition from among a plurality of regions that newly become regions to be searched for. The reason why the region is changed is that the larger the region is, the more the region includes spots. Therefore, the larger the region, the higher the probability that the region matches all the keywords included in the region search condition. The reason why the determination is performed by using the threshold value is because when the number of the found regions is small, a probability that a combination of an accommodation facility and a region related to each other is extracted from among the found accommodation facilities and regions is low. The threshold value used in this case is defined as T4. T4 is an example of a third number in the present invention.

In the accommodation facility reservation server 1, a set of regions to be searched is hierarchically defined. For example, a set of regions in a first layer is a set of municipalities. A set of regions in a second layer is a set of regions, each of which is formed by integrating a plurality of municipalities. In this case, each region is smaller than a prefecture. A set of regions in a third layer is a set of prefectures. The smaller the ordinal number is, the lower the layer is. The smaller the ordinal number is, the smaller an area of one region tends to be. The number of layers is optional. A criterion to define a set of regions in each layer is optional.

First, the accommodation facility reservation server 1 searches the set of regions in the first layer. The reason why the smallest regions are searched first is because the smaller the region, the higher the probability that the time taken to go from an accommodation facility to a spot combined with the accommodation facility is short. When the number of regions found at this time is smaller than T4, the accommodation facility reservation server 1 searches the set of regions in the second layer. As a result of this search, when the number of found regions is smaller than T4, the accommodation facility reservation server 1 searches the set of regions in the third layer. In this way, the accommodation facility reservation server 1 repeats the search until the number of found regions reaches T4 or more while changing regions to be searched for. When T4 or more of regions are found, the accommodation facility reservation server 1 extracts combinations of an accommodation facility and a region by using a search result at this time. When the number of found regions is smaller than T4 even if the set of regions in the highest layer is searched, any process can be performed. For example, the accommodation facility reservation server 1 may transmit a search result page displaying that there is no corresponding accommodation facility to the user terminal 3.

In the above description, T1 to T4, which are threshold values used for the determinations, are set in advance by, for example, an administrator of the accommodation facility reservation site. The administrator can set each threshold value to any value. For example, each threshold value may be set to 1. T2 and T3 are threshold values of the number of found accommodation facilities. Thus, T2 and T3 may be the same.

The accommodation facility reservation server 1 may divide a plurality of keywords specified at first by the user as a search condition into three or more search conditions. In this case, the number of the accommodation facility search conditions and the number of the region search conditions can be freely determined. When there is a plurality of accommodation facility search conditions, the accommodation facility reservation server 1 searches for accommodation facilities for each accommodation facility search condition. When there is a plurality of region search conditions, the accommodation facility reservation server 1 searches for regions for each region search condition. Then, the accommodation facility reservation server 1 extracts combinations of one or more accommodation facilities and one or more regions that are related to each other. For example, when there are two accommodation facility search conditions and one region search condition, the accommodation facility reservation server 1 extracts combinations of two accommodation facilities and one region that are related to each other from among combinations of any one of accommodation facilities found by one accommodation facility search condition, any one of accommodation facilities found by the other accommodation facility search condition, and any one of regions found by the region search condition. The reason why a plurality of accommodation facilities may be included in a combination is that the user may use a plurality of accommodation facilities included in the combination, such as, for example, the user may use a certain accommodation facility on a first day and another accommodation facility on a second day during a travel or a business trip, and may go to a spot which satisfies a request of the user and which is located in each of regions included in the combination. The reason why a plurality of regions may be included in a combination is that the user may use accommodation facilities included in the combination during a travel or a business trip and may go to a spot which satisfies a request of the user and which is located in each of a plurality of regions included in the combination.

### 1-3. Configuration of Accommodation Facility Reservation Server

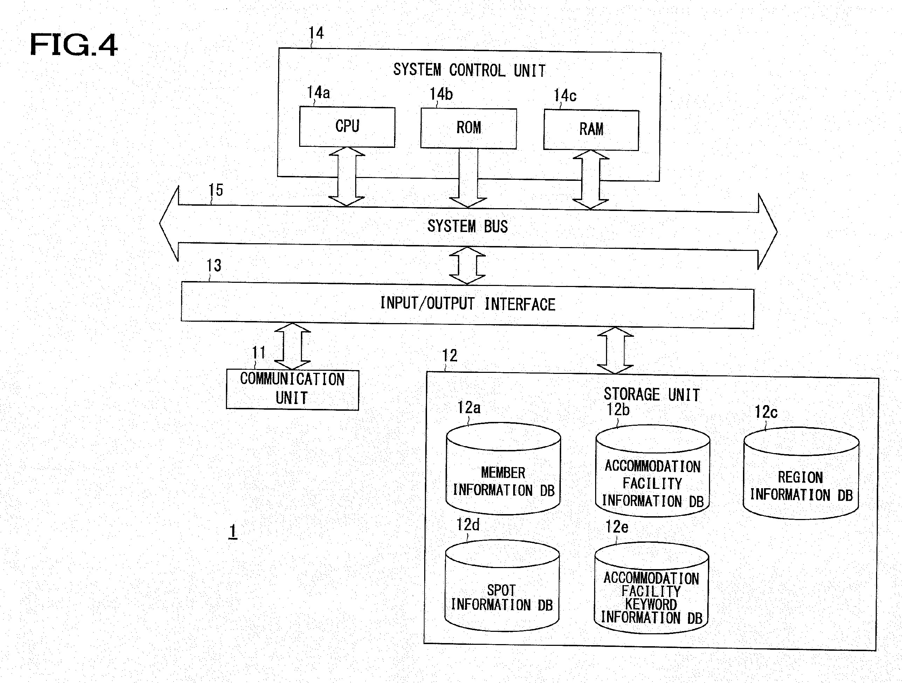

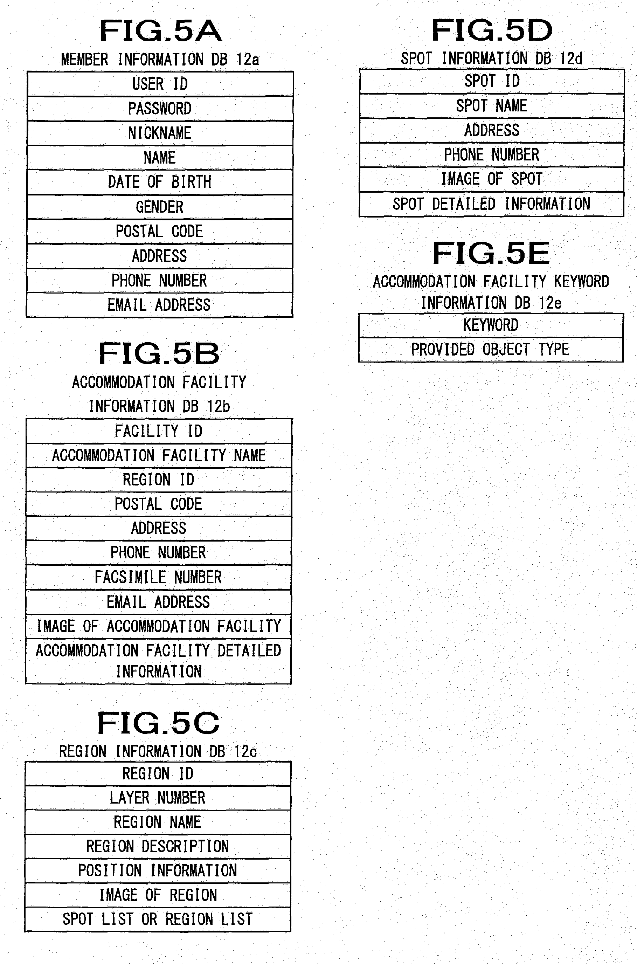

Next, a configuration of the accommodation facility reservation server 1 will be described with reference to FIGS. 4 and 5.

FIG. 4 is a block diagram showing an example of a schematic configuration of the accommodation facility reservation server 1 according to the present embodiment. As shown in FIG. 4, the accommodation facility reservation server includes a communication unit 11, a storage unit 12, an input/output interface 13, and a system control unit 14. The system control unit 14 and the input/output interface 13 are connected through a system bus 15.

The communication unit 11 connects to the network NW and controls communication state with the accommodation facility terminal 2 and the user terminal 3.

The storage unit 12 includes, for example, a hard disk drive and the like. In the storage unit 12, databases such as a member information DB 12a, an accommodation facility information DB 12b, a region information DB 12c, a spot information DB 12d, and an accommodation facility keyword information DB 12e are constructed. The "DB" is an abbreviation of database.

FIG. 5A is a diagram showing an example of content registered in the member information DB 12a. In the member information DB 12a, member information related to users registered in the information providing system S1 as a member is registered. Specifically, in the member information DB 12a, user attributes such as a user ID, a password, a nickname, a name, a date of birth, a gender, a postal code, an address, a phone number, and an email address are registered in association with each other for each user. The user ID is identification information of the user.

FIG. 5B is a diagram showing an example of content registered in the accommodation facility information DB 12b. In the accommodation facility information DB 12b, accommodation facility information related to accommodation facilities is registered. Specifically, in the accommodation facility information DB 12b, attributes of an accommodation facility, such as a facility ID, an accommodation facility name, a region ID, a postal code, an address, a phone number, a facsimile number, an email address, an image of the accommodation facility, and accommodation facility detailed information are registered in association with each other for each accommodation facility. The facility ID is identification information of the accommodation facility. The region ID is identification information of a region in which the accommodation facility is located. The region ID that is set in the accommodation facility information is, for example, a region ID of a region in the lowest layer. The accommodation facility detailed information is character information indicating detailed information related to the accommodation facility. For example, the accommodation facility detailed information includes an introduction of the accommodation facility, equipment included in the accommodation facility, services provided in the accommodation facility, equipment and furniture in a guest room, an access method to the accommodation facility, information related to hot springs, information related to guest rooms, and the like. The accommodation facility detailed information includes information of accommodation plan. The information of accommodation plan includes a name of the accommodation plan, a detailed description of the accommodation plan, and the like.

FIG. 5C is a diagram showing an example of content registered in the region information DB 12c. In the region information DB 12c, region information related to regions is registered. Specifically, in the region information DB 12c, a region ID, a layer number, a region name, a region description, position information, an image of the region, and either one of a spot list and a region list are registered in association with each other for each region. The region ID is identification information of the region. The layer number is a number of a layer in which the region is located. The position information is, for example, the longitude and latitude of the center of the region. The spot list is registered when the layer number is 1. The spot list is a list of spots located in the region. Specifically, in the spot list, spot IDs of the spots located in the region are registered. The spot ID is identification information of the spot. The region list is registered when the layer number is greater than or equal to 2. The region list is a list of regions located in the region defined by the region information among regions located in a layer immediately below the layer indicated by the layer number. Specifically, in the region list, region IDs of the regions located in the region defined by the region information are registered. In the region information of a region located in a layer higher than the first layer, the list of spots located in the region is not defined. However, the list of regions located in the lower layer is defined. Therefore, it is possible to identify spots located in a region located in a layer higher than the first layer on the basis of the region information of regions located in a lower layer.

FIG. 5D is a diagram showing an example of content registered in the spot information DB 12d. In the spot information DB 12d, spot information related to spots is registered. Specifically, in the spot information DB 12d, attributes of a spot such as a spot ID, a spot name, an address, a phone number, an image of the spot, and spot detailed information are registered in association with each other for each spot. The spot ID is identification information of the spot. The spot detailed information is character information indicating detailed information related to the spot. For example, the spot detailed information includes a description of the spot, services provided in the spot, items for sale that can be purchased in the spot, equipment located in the spot, things which the user can do in the spot, and the like.

FIG. 5E is a diagram showing an example of content registered in the accommodation facility keyword information DB 12e. In the accommodation facility keyword information DB 12e, accommodation facility keyword information related to a keyword related to an object provided in the accommodation facility is registered. Specifically, in the accommodation facility keyword information DB 12e, a keyword, a provided object type, and the like are registered in association with each other for each keyword. The keyword is related to an obj ect provided in the accommodation facility. The provided object type indicates a type of an object related to the keyword. Examples of the provided object type include a meal, a bath, and a guest room.

Next, other information stored in the storage unit 12 will be described. For displaying Web pages, the storage unit 12 stores various data such as HTML (HyperText Markup Language) documents, XML (Extensible Markup Language) documents, image data, text data, and electronic documents. Further, the storage unit 12 stores various setting values set by an administrator or the like. Examples of the setting values include threshold values such as T1 to T4.

Further, the storage unit 12 stores various programs such as an operating system, a WWW (World Wide Web) server program, a DBMS (Database Management System), and an accommodation facility reservation processing program. The accommodation facility reservation processing program is a program for performing processes such as a search for accommodation facilities and regions and a reservation of an accommodation facility. The accommodation facility reservation processing program is an example of a search program of the present invention. For example, the various programs may be acquired from another server device or the like through the network NW or may be recorded in a recording medium such as a DVD (Digital Versatile Disc) and read through a drive device.

The input/output interface 13 performs interface processing among the communication unit 11, the storage unit 12, and the system control unit 14.

The system control unit 14 includes a CPU 14a, a ROM (Read Only Memory) 14b, a RAM (Random Access Memory) 14c, and the like. In the system control unit 14, the CPU 14a reads and executes various programs, so that the system control unit 14 functions as a dividing means, a search means, an extraction means, an change means of the present invention.

The accommodation facility reservation server 1 may include a plurality of server devices. For example, a server device that searches for accommodation facilities and regions, a server device that performs reservation processing of an accommodation facility, a server device that transmits a web page according to a request from the user terminal 3, a server device that manages databases, and the like may be connected to each other by a LAN or the like.

### 1-4. Operation of Information Providing System

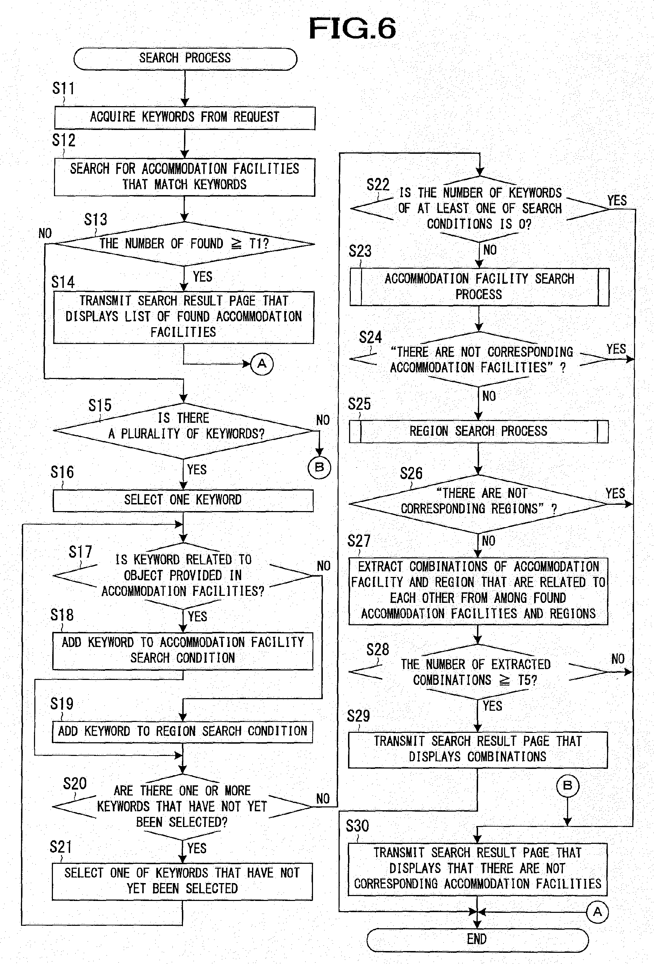

Next, an operation of the information providing system S1 will be described with reference to FIGS. 6 to 8€.

FIG. 6 is a flowchart showing a process example of a search process of the system control unit 14 of the accommodation facility reservation server 1 according to the present embodiment. In the accommodation facility reservation site, the user operates the user terminal 3 and specifies one or more keywords to search for accommodation facilities. Then, the user terminal 3 transmits a search request to the accommodation facility reservation server 1. The search request includes the specified keywords. The search process is started when the accommodation facility reservation server 1 receives the search request.

As shown in FIG. 6, the system control unit 14 acquires all the specified keywords from the received search request (step S11). Next, the system control unit 14 searches for accommodation facilities that match all the specified keywords (step S12). Specifically, the system control unit 14 searches for the accommodation facility information in which at least one of the accommodation facility name and the accommodation facility detailed information includes the specified keyword from among the accommodation facility information registered in the accommodation facility information DB 12b. When a plurality of keywords are specified, the system control unit 14 searches for the accommodation facility information in which, for each of all the keywords, at least one of the accommodation facility name and the accommodation facility detailed information includes a keyword.

After completing the process of step S12, the system control unit 14 determines whether or not the number of accommodation facilities found is greater than or equal to T1 (step S13). At this time, if the system control unit 14 determines that the number of accommodation facilities found is greater than or equal to T1 (step S13: YES), the system control unit 14 transmits a search result page that displays a list of found accommodation facilities to the user terminal 3 that is the transmission source of the search request (step S14). After completing this process, the system control unit 14 ends the search process.

On the other hand, if the system control unit 14 determines that the number of accommodation facilities found is smaller than T1 (step S13: NO), the system control unit 14 determines whether or not a plurality of keywords is specified (step S15). At this time, if the system control unit 14 determines that one keyword is specified (step S15: NO), the system control unit 14 transmits a search result page displaying that there are not corresponding accommodation facilities to the user terminal 3 that is the transmission source of the search request (step S30). After completing this process, the system control unit 14 ends the search process.

Incidentally, when T1 has been set to a value greater than or equal to T2 and one or more accommodation facilities are found which match all of the plurality of keywords specified by the user, the system control unit 14 may transmit a search result page that displays a list of the found accommodation facilities to the user terminal 3.

On the other hand, if the system control unit 14 determines that a plurality of keywords is specified (step S15: YES), the system control unit 14 selects one of the plurality of specified keywords (step S16). Next, the system control unit 14 determines whether or not the selected keyword is a keyword related to an object provided in the accommodation facilities (step S17). Specifically, the system control unit 14 searches the accommodation facility keyword information DB 12e for a keyword identical to the selected keyword. At this time, if a keyword identical to the selected keyword is registered in the accommodation facility keyword information DB 12e, the system control unit 14 determines that the selected keyword is a keyword related to an object provided in the accommodation facilities (step S17: YES). In this case, the system control unit 14 adds the selected keyword to the accommodation facility search condition (step S18). On the other hand, if a keyword identical to the selected keyword is not registered in the accommodation facility keyword information DB 12e, the system control unit 14 determines that the selected keyword is not a keyword related to an object provided in the accommodation facilities (step S17: NO). In this case, the system control unit 14 adds the selected keyword to the region search condition (step S19).

After completing the process of step S18 or step S19, the system control unit 14 determines whether or not there are one or more keywords that have not yet been selected among the plurality of specified keywords (step S20). At this time, if the system control unit 14 determines that there are one or more keywords that have not yet been selected (step S20: YES), the system control unit 14 selects one of the keywords that have not yet been selected (step S21). Next, the system control unit 14 proceeds to step S17. As a dividing means, the system control unit 14 divides the plurality of keywords into the accommodation facility search condition and the region search condition by repeating the processes of steps S17 to S21. If the system control unit 14 determines that all the keywords have been selected (step S20: NO), the system control unit 14 determines whether or not the number of keywords of at least one of the accommodation facility search condition and the region search condition is 0 (step S22). At this time, if the system control unit 14 determines that the number of keywords of at least one of the search conditions is 0 (step S22: YES), the system control unit 14 proceeds to step S30. In this case, the system control unit 14 may newly divide the plurality of keywords specified by the user and proceed to step S23. At this time, the system control unit 14 performs the division by, for example, a division method different from that in the processes of steps S16 to S21.

On the other hand, if the system control unit 14 determines that the number of keywords of each of the search conditions is 1 or more (step S22: NO), the system control unit 14 performs an accommodation facility search process (step S23).

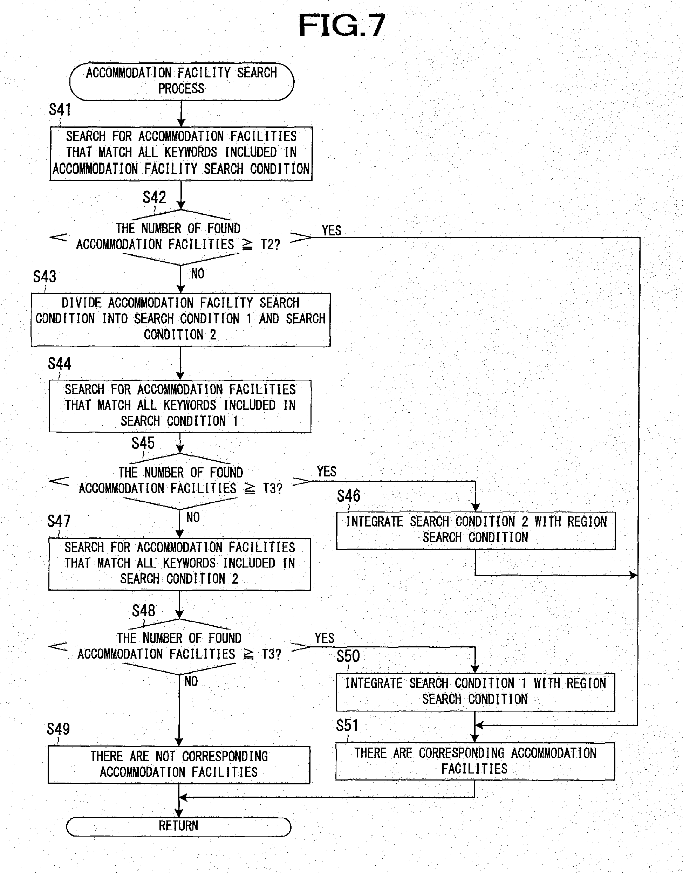

FIG. 7 is a flowchart showing a process example of the accommodation facility search process of the system control unit 14 of the accommodation facility reservation server 1 according to the present embodiment.

As shown in FIG. 7, as a search means, the system control unit 14 searches for accommodation facilities that match all the keywords included in the accommodation facility search condition (step S41). The search method at this time is basically the same as that in step S12 in the search process. Next, the system control unit 14 determines whether or not the number of found accommodation facilities is greater than or equal to T2 (step S42). At this time, if the system control unit 14 determines that the number of found accommodation facilities is greater than or equal to T2 (step S42: YES), the system control unit 14 sets a return value to the search process to "there are corresponding accommodation facilities" (step S51). After completing this process, the system control unit 14 ends the accommodation facility search process.

On the other hand, if the system control unit 14 determines that the number of found accommodation facilities is smaller than T2 (step S42: NO), as a dividing means, the system control unit 14 divides the accommodation facility search condition into the search condition 1 and the search condition 2 (step S43). Specifically, the system control unit 14 acquires each provided object type corresponding to each keyword included in the accommodation facility search condition from the accommodation facility keyword information DB 12e. Next, the system control unit 14 classifies the keywords by the provided object types. In this way, the system control unit 14 forms groups of keywords whose provided object types are the same. Then, for example, the system control unit 14 defines one group of keywords as the search condition 1 and defines the other group of keywords as the search condition 2. Any provided object type of a group of keywords may be the search condition 1 and provided object type of a group of keywords may be the search condition 2. If the number of groups of keywords is three or more, the system control unit 14 integrates some of the groups together and makes two groups of keywords. If the number of groups of keywords is only one, for example, the system control unit 14 may randomly determine what keyword is included in what search condition.

When the system control unit 14 completes the division of the accommodation facility search condition, as a search means, the system control unit 14 searches for accommodation facilities that match all the keywords included in the search condition 1 (step S44). The search method at this time is basically the same as that in step S12 in the search process. Next, the system control unit 14 determines whether or not the number of found accommodation facilities is greater than or equal to T3 (step S45). At this time, if the system control unit 14 determines that the number of found accommodation facilities is greater than or equal to T3 (step S45: YES), the system control unit 14 integrates the search condition 2 with the region search condition (step S46). Next, the system control unit 14 proceeds to step S51.

On the other hand, if the system control unit 14 determines that the number of found accommodation facilities is smaller than T3 (step S45: NO), as a search means, the system control unit 14 searches for accommodation facilities that match all the keywords included in the search condition 2 (step S47). The search method at this time is basically the same as that in step S12 in the search process. Next, the system control unit 14 determines whether or not the number of found accommodation facilities is greater than or equal to T3 (step S48). At this time, if the system control unit 14 determines that the number of found accommodation facilities is greater than or equal to T3 (step S48: YES), the system control unit 14 integrates the search condition 1 with the region search condition (step S50). Next, the system control unit 14 proceeds to step S51.

On the other hand, if the system control unit 14 determines that the number of found accommodation facilities is smaller than T3 (step S48 : NO), the system control unit 14 sets the return value to the search process to "there are not corresponding accommodation facilities" (step S49). After completing this process, the system control unit 14 ends the accommodation facility search process.

If the number of accommodation facilities found by using the search condition 1 is smaller than T3 in step S45, the system control unit 14 may further divide the search condition 1 into a search condition 1a and a search condition 1b. Then, the system control unit 14 may search for accommodation facilities that match all the keywords included in the search condition 1a and search for accommodation facilities that match all the keywords included in the search condition 1b. A criterion to divide the search condition 1 can be freely determined. For example, the system control unit 14 may divide the search condition 1 according to the provided object types or may divide the search condition 1 randomly. When the system control unit 14 divides the search condition 1 and performs search, a plurality of corresponding accommodation facility sets are generated. Therefore, when extracting combinations, the system control unit 14 extracts combinations of two accommodation facilities and one region that are related to each other from among combinations of any one accommodation facility included in a corresponding accommodation facility set found by the search condition 1a, any one accommodation facility included in a corresponding accommodation facility set found by the search condition 1b, and any one region included in a corresponding region set found by the region search condition.

The system control unit 14 may search for accommodation facilities that match all the keywords included in the search condition 1a and integrate the search condition 1b with the search condition 2. When the number of accommodation facilities found by using the search condition 1a is greater than or equal to T3, the system control unit 14 may integrate the search condition 2 including the search condition 1b with the region search condition.

Also, when the number of accommodation facilities found by using the search condition 2 is smaller than T3 in step S48, the system control unit 14 may further divide the search condition 2. Processing content after the division is basically the same as that in the case in which the search condition 1 is divided.

After completing the accommodation facility search process, as shown in FIG. 6, the system control unit 14 determines whether or not the return value is set to "there are not corresponding accommodation facilities" (step S24). At this time, if the system control unit 14 determines that the return value is set to "there are not corresponding accommodation facilities" (step S24: YES), the system control unit 14 proceeds to step S30. On the other hand, if the system control unit 14 determines that the return value is not set to "there are not corresponding accommodation facilities" (step S24: NO), the system control unit 14 performs a region search process (step S25).

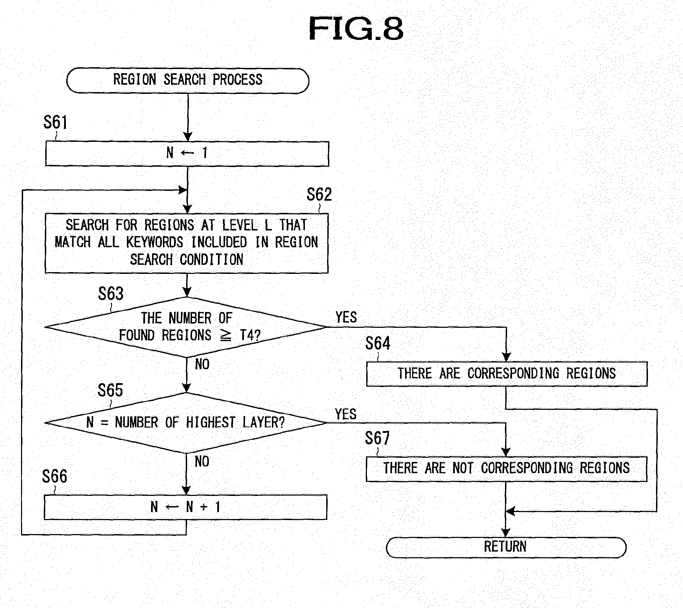

FIG. 8 is a flowchart showing a process example of the region search process of the system control unit 14 of the accommodation facility reservation server 1 according to the present embodiment.

As shown in FIG. 8, the system control unit 14 sets a layer number N to 1 (step S61). Next, as a search means, the system control unit 14 searches for regions that match all the keywords included in the region search condition from a set of regions in an Nth layer (step S62). Specifically, the system control unit 14 selects one piece of region information in which the layer number is N from the region information registered in the region information DB 12c. Next, when the selected region information includes a spot list, the system control unit 14 acquires spot information corresponding to each spot ID registered in the spot list from the spot information DB 12d. The layer number N is 1 at this time, so that the region information includes a spot list. Next, the system control unit 14 searches for each keyword included in the region search condition, from the region name and the region description included in the selected region information and the spot name and the spot detailed information included in the acquired each piece of spot information. Here, when all the keywords included in the region search condition are found, the system control unit 14 acquires the region ID included in the selected region information as a region ID of a region that matches all the keywords included in the region search condition. The system control unit 14 performs such processing for all pieces of region information in which the layer number is N.

After completing the process of step S62, the system control unit 14 determines whether or not the number of found regions is greater than or equal to T4 (step S63). At this time, if the system control unit 14 determines that the number of found regions is greater than or equal to T4 (step S63: YES), the system control unit 14 sets a return value to the search process to "there are corresponding regions" (step S64). After completing this process, the system control unit 14 ends the region search process.

On the other hand, if the system control unit 14 determines that the number of found regions is smaller than T4 (step S63: NO), the system control unit 14 determines whether or not the layer number N is the same as the number of the highest layer (step S65). At this time, if the system control unit 14 determines that the layer number N is not the same as the number of the highest layer (step S65: NO), the system control unit 14 adds 1 to the layer number N (step S66). Thereby, as the change means, the system control unit 14 makes the sizes of regions to be searched larger than those used when the previous search is performed in step S62. Next, the system control unit 14 proceeds to step S62.

The system control unit 14 repeats the search for regions while gradually changing the size of regions to be searched for to be larger until the number of found regions becomes greater than or equal to T4 by repeating the processes of steps S62 to S66. Here, in step S62, when the layer number N is greater than or equal to 2, no spot list is included in the region information to be searched for. In this case, the system control unit 14 acquires region information corresponding to each region ID registered in the region list included in the region information from the region information DB 12c. Next, the system control unit 14 determines whether or not a spot list is included in the acquired region information. At this time, if no spot list is included in the acquired region information, the system control unit 14 further acquires region information corresponding to each region ID registered in the region list included in the acquired region information. The system control unit 14 repeats the acquisition of region information until the system control unit 14 acquires region information including a spot list. Then, the system control unit 14 acquires spot information based on the spot list included in the acquired region information. The system control unit 14 searches for keywords by using the acquired spot information.

In step S65, if the system control unit 14 determines that the layer number N is the same as the number of the highest layer (step S65: YES), the system control unit 14 sets the return value to "there are not corresponding regions" (step S67). This is because there are not regions to be searched for. After completing this process, the system control unit 14 ends the region search process.

When the system control unit 14 determines that the layer number N is the same as the number of the highest layer, the system control unit 14 may divide the region search condition into a region search condition 1 and a region search condition 2. Then, the system control unit 14 may search for regions that match all the keywords included in the region search condition 1 and search for regions that match all the keywords included in the region search condition 2. A criterion to divide the region search condition can be freely determined. For example, the system control unit 14 may divide the region search condition according to a type of obj ect related to a keyword. When the system control unit 14 divides the region search condition and performs search, a plurality of corresponding region sets are generated. Therefore, when extracting combinations, the system control unit 14 extracts combinations of one accommodation facility and two regions that are related to each other from among combinations of any one accommodation facility included in a corresponding accommodation facility set found by the accommodation facility search condition, any one region included in a corresponding region set found by the region search condition 1, and any one region included in a corresponding region set found by the region search condition 2.

After completing the region search process, as shown in FIG. 6, the system control unit 14 determines whether or not the return value is set to "there are not corresponding regions" (step S26). At this time, if the system control unit 14 determines that the return value is set to "there are not corresponding regions" (step S26: YES), the system control unit 14 proceeds to step S30.

On the other hand, if the system control unit 14 determines that the return value is not set to "there are not corresponding regions" (step S26: NO), as an extraction means, the system control unit 14 extracts combinations of an accommodation facility and a region that are related to each other from the corresponding accommodation facility set which is a set of accommodation facilities found in the accommodation facility search process and the corresponding region set which is a set of regions found in the region search process (step S27). For example, the system control unit 14 extracts combinations based on a positional relationship between a region in which a found accommodation facility is located and a found region. The region in which the found accommodation facility is located is indicated by the region ID included in the accommodation facility information. For example, for each found accommodation facility, it is determined whether or not the region in which the accommodation facility is located is the same as any one of found regions or whether or not the region in which the accommodation facility is located is included in any one of found regions. In other words, the system control unit 14 determines whether or not an accommodation facility is located in any one of regions. When an accommodation facility is located in any one of found regions, the system control unit 14 selects the accommodation facility and the region as a combination. When regions adjacent to or near a region in which an accommodation facility is located are included in regions related to the accommodation facility, for example, a database in which information indicating regions adjacent to each other or information indicating regions near each other is registered may be constructed in the storage unit 12. When an accommodation facility is located in a region adjacent to or near any one of found regions, on the basis of the database, the system control unit 14 selects the accommodation facility and the region as a combination. When the system control unit 14 extracts a combination based on a distance, the system control unit 14 acquires the longitude and latitude of a position where the accommodation facility is located based on the address of the accommodation facility. Then, the system control unit 14 calculates a distance from the position where the accommodation facility is located to the central position in the region. Then, the system control unit 14 extracts combinations of an accommodation facility where the calculated distance is smaller than or equal to a predetermined distance and a region.

After completing the process of step S27, the system control unit 14 determines whether or not the number of extracted combinations is greater than or equal to T5 (step S28). T5 is a threshold value that is set by, for example, an administrator of the accommodation facility reservation site. The administrator can set T5 to any value. For example, T5 may be set to 1. If the system control unit 14 determines that the number of extracted combinations is smaller than T5 (step S28: NO), the system control unit 14 proceeds to step S30.

When the system control unit 14 determines that the number of extracted combinations is smaller than T5, the system control unit 14 may newly divide the plurality of keywords specified by the user and proceed to step S23. In this case, the system control unit 14 divides the keywords so that combinations of keywords included respectively in the accommodation facility search condition and the region search condition are different from combinations of keywords included respectively in the accommodation facility search condition and the region search condition that are formed in the first division.

When T4 is set to a value of 2 or more, there is a case in which the combination display area 120 corresponding to extracted combinations is not displayed in the search result page due to proceeding to step S30 even though one or more combinations are extracted. Therefore, when one or more combinations are extracted, the system control unit 14 may proceed to step S29.

In step S28, if the system control unit 14 determines that the number of extracted combinations is greater than or equal to T5 (step S28: YES), the system control unit 14 transmits an HTML document of a search result page that displays a list of the extracted combination to the user terminal 3 that is the transmission source of the search request (step S29). Specifically, the system control unit 14 generates data for displaying the accommodation facility information display area 110 based on the accommodation facility name, the accommodation facility detailed information, and the like included in the accommodation facility information of an accommodation facility included in a combination. At this time, if a keyword included in the accommodation facility search condition matches an accommodation plan, the system control unit 14 generates display data so that information of the accommodation plan is displayed. Further, the system control unit 14 generates data for displaying the region information display area 120 based on the region name and the region description included in the region information of a region included in the combination. At this time, if a keyword included in the region search condition matches a spot in the region, the system control unit 14 generates display data so that information of the spot is displayed. Next, the system control unit 14 generates an HTML document including the data for displaying the accommodation facility information display area 110, and the data for displaying the region information display area 120. Then, the system control unit 14 transmits the generated HTML document. After completing the process of step S29, the system control unit 14 ends the search process. For example, as shown in FIG. 3, the user terminal 3 displays the search result page based on the HTML document received from the accommodation facility reservation server 1.

When T1 is set to a value greater than or equal to 2, there is a case in which combinations of an accommodation facility and a region are searched for although one or more accommodation facilities are found which match all of the plurality of keywords specified by the user. In this case, the system control unit 14 may generate an HTML document of search result page so that both of information of the found accommodation facilities and information of found combinations of the accommodation facility and the region are displayed.

As described above, according to the present embodiment, the system control unit 14 of the accommodation facility reservation server 1 divides a plurality of keywords specified as a search condition into the accommodation facility search condition and the region search condition, each of which includes at least one keyword, searches for accommodation facilities that match all the keywords included in the accommodation facility search condition and regions that match all the keywords included in the region search condition, and extracts combinations of an accommodation facility and a region that have a predetermined relationship to each other from among combinations of any one of accommodation facilities found by the accommodation facility search condition and any one of regions found by the region search condition. Therefore, a user can obtain search results desired by the user as combinations of an accommodation facility and a region without changing a search condition even when a sufficient number of accommodation facilities do not exist which match all of a plurality of keywords specified as the search condition.

Further, when the result of search for accommodation facilities that match all of the plurality of keywords specified as the search condition is that the number of the found accommodation facilities is smaller than T1, the system control unit 14 divides the plurality of keywords. Therefore, it is possible to prevent an unnecessarysearch process from being performed while the user can obtain a sufficient number of search results more desirable for the user.

Further, when the number of accommodation facilities found by the accommodation facility search condition is smaller than T2, the system control unit 14 divides the accommodation facility search condition into the search condition 1 and the search condition 2, integrates the search condition 2 with the region search condition, searches for accommodation facilities that match all the keywords included in the search condition 1 and regions that match all the keywords included in the region search condition, and extracts combinations of an accommodation facility and a region that are related to each other from among combinations of any one of accommodation facilities found by the search condition 1 and any one of regions found by the region search condition. Therefore, it is possible to more easily obtain a sufficient number of search results desired by the user without increasing the number of accommodation facilities or regions included in the extracted combinations.

Further, the system control unit 14 determines whether or not a keyword is a keyword related to a provision object provided by an accommodation facility for each of a plurality of keywords, includes keywords determined to be related to the provision object in the accommodation facility search condition, and includes keywords determined not to be related to the provision object in the region search condition. Therefore, it is possible to obtain a sufficient number of combinations including an accommodation facility that provides a provision object desired by the user.

When a location of any one of accommodation facilities found by the accommodation facility search condition is within a predetermined range with respect to any one of regions found by the region search condition, the system control unit 14 extracts the accommodation facility and the region as a combination of an accommodation facility and a region related to each other. Therefore, it is possible to obtain a combination of an accommodation facility and a region, to both of which the user can easily go around the same time.

Further, when the number of regions found by the region search condition is smaller than T4, the system control unit 14 makes the sizes of regions to be searched larger than when the regions the number of which is smaller than T4 was found, searches for regions that match all the keywords included in the region search condition from among the regions whose size is changed, and extracts combinations of an accommodation facility and a region that are related to each other from among combinations of any one of accommodation facilities found by the accommodation facility search condition and any one of regions that are found by the region search condition from among the regions whose size is changed. Therefore, when the number of found regions is smaller than T4, the size of regions to be searched for becomes large, so that the probability that regions that match all the keywords included in the region search condition are found increases. Therefore, it is possible to more easily obtain a sufficient number of search results desired by the user.

### 2. Second Embodiment

The second embodiment described below is an embodiment where the present invention is applied to an information providing system for purchasing an item for sale.

### 2-1. Schematic Configuration and Function of Information Providing System

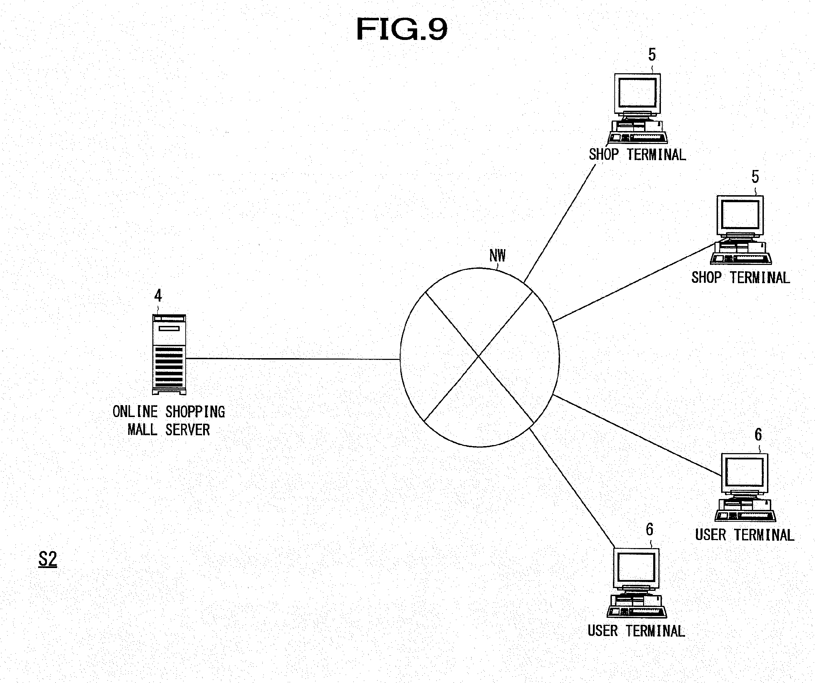

First, a configuration of an information providing system S2 according to the present embodiment will be described with reference to FIG. 9. FIG. 9 is a diagram showing an example of a schematic configuration of the information providing system S2 according to the present embodiment. In FIG. 9, the same components as those in FIG. 1 are denoted by the same reference numerals.

As shown in FIG. 9, the information providing system S2 includes an online shopping mall server 4, a plurality of shop terminals 5, and a plurality of user terminals 6. The online shopping mall server 4, each shop terminal 5, and each user terminal 6 can transmit and receive data to and from each other through a network NW.

The online shopping mall server 4 is a server device that performs various processes related to an online shopping mall from which items for sale can be purchased. The online shopping mall server 4 is an example of a search apparatus of the present invention. A user can purchase a desired item for sale from a desired shop by using the online shopping mall. For example, the online shopping mall server 4 transmits a web page of the online shopping mall and performs processes related to a search and a purchase of an item for sale according to a request from the user terminal 6. The item for sale is an example of a search object of the present invention.

The shop terminal 5 is a terminal device used by an employee or the like of a shop that is open in the online shopping mall. The shop terminal 5 accesses a server device such as the online shopping mall server 4 on the basis of an operation from an employee or the like. Thereby, the shop terminal 5 receives a web page from the server device and displays the web page. In the shop terminal 5, software such as a browser and an email client is installed. For example, an employee registers information of an item for sale to be sold in the online shopping mall and checks content of order of an item for sale by using the shop terminal 5.

The user terminal 6 is a terminal device of a user who uses the online shopping mall. The configuration and function of the user terminal 6 are the same as those of the user terminal 3 in the first embodiment.

The user can specify a search condition to search for an item for sale to be a purchase candidate in the online shopping mall. For example, it is possible to specify a keyword as a search condition. For example, the user can specify a word that concisely represents a condition of an item for sale desired by the user as a keyword. When a search condition is specified, the online shopping mall server 4 searches for items for sale that satisfy the search condition. Specifically, the online shopping mall server 4 searches for items for sale where the specified keyword is included in a sale item name and/or a sale item description. Then, the online shopping mall server 4 transmits a sale item search result page to the user terminal 6.

The sale item search result page is a web page on which a list of found items for sale is displayed. For example, on the sale item search result page, a sale item name, an image of an item for sale, a sale item price, a shop name of a selling agency, and the like are displayed for each item for sale. Further, a link to a sale item page of a found item for sale is embedded in the sale item search result page. In the sale item search result page, if the user selects a link of any item for sale, a corresponding sale item page is displayed on a screen of the user terminal 6. The sale item page is a web page on which detailed information related to one item for sale is displayed. The user can purchase an item for sale whose information is displayed on the sale item page by performing an operation to order the item for sale on the sale item page.

### 2-2. Division of a Plurality of Keywords Specified

A user may have a plurality of conditions requested for an item for sale when the user searches for the item for sale. When a plurality of search conditions are specified, there is a case in which the user cannot obtain a sufficient number of search results desired by the user because of the same reason as that in the first embodiment.

Thus, the online shopping mall server 4 divides a plurality of keywords specified as a search condition into a partial search condition 1 and a partial search condition 2, each of which includes at least one keyword. The partial search condition 1 and the partial search condition 2 are examples of a child search condition of the present invention. Next, the online shopping mall server 4 searches for items for sale that match all the keywords included in a partial search condition for each partial search condition. A set of items for sale that are found for each partial search condition is referred to as a "corresponding sale item set". Next, the online shopping mall server 4 extracts combinations of items for sale related to each other from among combinations of any one of items for sale included in a corresponding sale item set that is found by using the partial search condition 1 and any one of items for sale included in a corresponding sale item set that is found by using the partial search condition 2. Then, the online shopping mall server 4 causes the user terminal 6 to present extracted combinations to the user as a search result.

An example of a criterion to determine a combination of items for sale as a combination of items for sale related to each other will be described. It is assumed that there is an ideal item for sale that satisfies all requests of the user. A combination of items for sale related to each other is determined by whether or not a plurality of items for sale becomes a substitute of the ideal item for sale by using the plurality of items for sale at the same time or in combination. The user can satisfy his or her request by purchasing a combination of items for sale that satisfies such a condition. Examples of a combination of items for sale related to each other include a plurality of items for sale made by the same maker, a plurality of items for sale in the same category, a plurality of items for sale sold by the same shop, and a plurality of items for sale in a relationship between a main item for sale and an optional item of the main item for sale. Examples of an optional item include consumable goods such as a replaceable toothbrush for an electric toothbrush which is a main item for sale and an accessory such as a case that houses a mobile PC for the mobile PC which is a main item for sale.

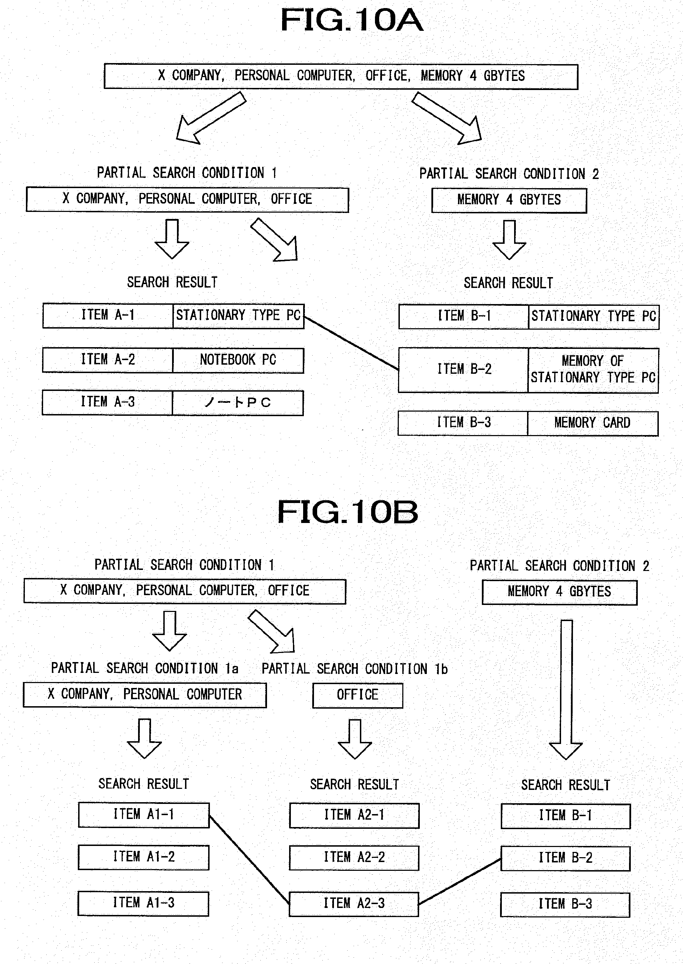

FIG. 10A is a diagram showing a search example of an item for sale. For example, it is assumed that a user wants to purchase a personal computer. The user wants a personal computer which is made by X company, is pre-installed with office software, and has a memory capacity of 4 Gbytes. Therefore, as shown in FIG. 10A, the user specifies "X company, personal computer, office, memory 4 Gbytes" as a plurality of keywords.

The online shopping mall server 4 searches for items for sale that correspond to all of a specified plurality of keywords, and divides the plurality of keywords into a partial search condition 1 and a partial search condition 2 when the number of found items for sale is smaller than a threshold value. The threshold value used in this case is defined as T6. T6 is an example of a first number in the present invention. A criterion to divide a plurality of keywords is optional. For example, when M keywords are specified, the online shopping mall server 4 may divide the M keywords into a partial search condition 1 including M - 1 keywords and a partial search condition 2 including 1 keyword. The reason why the keywords are divided in this way is that at least one item for sale among items for sale included in a combination to be extracted is to be an item for sale that satisfies most of the requests of the user. In this case, items for sale found by using the partial search condition 1 are items for sale that satisfy most of the requests of the user. In this case, the online shopping mall server 4 may acquire the number of items for sale found by each of the M keywords and put a keyword by which the smallest number of items for sale are found into the partial search condition 2. This is because there is a probability that the keyword by which the smallest number of items for sale are found is the biggest factor for the user not to be able to obtain a sufficient number of desired results. It is possible to increase the probability to be able to find items for sale that satisfy the partial search condition 1 by removing the keyword that is a factor for the user not to be able to obtain a sufficient number of desired results from the partial search condition 1. The online shopping mall server 4 may divide a plurality of keywords by another method.

For example, it is assumed that the keyword by which the smallest number of items for sale are found is "memory 4 Gbytes". In this case, "X company, personal computer, office, memory 4 Gbytes" is divided into the partial search condition 1 "X company, personal computer, office" and the partial search condition 2 "memory 4 Gbytes".

It is assumed that items for sale, A-1, A-2, and A-3 are found as items for sale that match the "X company, personal computer, office". The item for sale A-1 is a stationary type personal computer. The items for sale A-2 and A-3 are notebook personal computers. There is a probability that the items for sale A-1, A-2, and A-3 are personal computers, made by the X company, in which the office software is pre-installed. On the other hand, it is assumed that items for sale B-1, B-2, and B-3 are found as items for sale that match the "memory 4 Gbytes". The item for sale B-1 is a stationary type personal computer. The item for sale B-2 is an additional memory for a stationary type personal computer. The item for sale B-3 is a memory card for a mobile phone. There is a probability that the memory capacity of the items for sale B-1, B-2, and B-3 is 4 Gbytes.

Here, the item for sale A-1 and the item for sale B-2 are in a relationship between a main item for sale and an optional item. Therefore, a combination of the item for sale A-1 and the item for sale B-2 is extracted as a search result. This is because a personal computer that satisfies requests of the user is made by integrating the item for sale B-2 with the item for sale A-1. On the other hand, the item for sale A-1 and the item for sale B-1 are in the same category. However, it is not possible to combine the item for sale A-1 and the item for sale B-1 together. Even if the item for sale A-1 and the item for sale B-1 can be used at the same time, it is not possible to make an item for sale that satisfies the requests of the user. Therefore, a combination of the item for sale A-1 and the item for sale B-1 is not extracted.

It is not possible to integrate the item for sale B-2 with the item for sale A-2 or the item for sale A-3. Therefore, a combination of the item for sale A-2 and the item for sale B-2 and a combination of the item for sale A-3 and the item for sale B-2 are not extracted. Although the item for sale B-3 may be connected to the items for sale A-1 to A-3, the item for sale B-3 is not an optional item of a personal computer. Therefore, a combination including the item for sale B-3 is not extracted.

A criterion to determine a combination of items for sale as a combination of items for sale related to each other may be changed according to, for example, the category of the items for sale. In the example of the personal computers described above, a plurality of items of sale in the same category do not form a combination of items for sale related to each other. However, a plurality of items of sale in the same category may form a combination of items for sale related to each other depending on the category of the items for sale. For example, it is assumed that a user wants to purchase a one-pot dish including oysters, crabs, and shrimps. Therefore, the user specifies "one-pot dish, oysters, crabs, shrimps" as a plurality of keywords. If there is no item for sale corresponding to the "one-pot dish, oysters, crabs, shrimps", the "one-pot dish, oysters, crabs, shrimps" is divided into, for example, "one-pot dish, oysters, crabs" and "shrimps". Then, a one-pot dish including oysters and crabs is found as an item for sale corresponding to the "one-pot dish, oysters, crabs" and edible shrimps are found as an item for sale corresponding to the "shrimps". It is possible to make a one-pot dish which the user wants to eat by adding shrimps to the one-pot dish including oysters and crabs. Both the one-pot dish and the shrimps are food. The online shopping mall server 4 extracts a plurality of items for sale, whose category is food, as a combination of items for sale, so that it is possible to extract a combination of items for sale that satisfy the requests of the user.

If the number of items for sale found by using the partial search condition 1 is smaller than a threshold value, the online shopping mall server 4 may further divide the partial search condition 1 into a partial search condition 1a and a partial search condition 1b. The partial search condition 1 and the partial condition are examples of grandchild conditions. Next, the online shopping mall server 4 searches for items for sale that match all the keywords included in the partial search condition 1a, items for sale that match all the keywords included in the partial search condition 1b, and items for sale that match all the keywords included in the search condition 2. The online shopping mall server 4 may extract combinations of items for sale related to each other from among combinations of any one of items for sale found by using the partial search condition 1a, any one of items for sale found by using the partial search condition 1b, and any one of items for sale found by using the partial search condition 2. The threshold value used at this time is defined as T7. T7 is an example of a second number in the present invention.

FIG. 10B is a diagram showing a division example of the partial search condition 1.

For example, among "X company", "personal computer" and "office" included in the partial search condition 1, it is assumed that the number of items for sale found by "office" is the smallest. In this case, "X company, personal computer, office" is divided into the partial search condition 1 including "X company, personal computer" and the partial search condition 2 including "office". For example, a personal computer made by the X company is found as an item for sale corresponding to the "X company, personal computer", the office software is found as an item for sale corresponding to the "office", and an additional memory for a personal computer is found as an item for sale corresponding to the "memory 4 Gbytes". Here, it is possible to install the office software in the personal computer, so that the office software can be considered as an optional item of the personal computer. The additional memory is an optional item of the personal computer. Therefore, a combination of the personal computer, the office software, and the additional memory is extracted.

The online shopping mall server 4 may divide a plurality of keywords specified at first by the user as a search condition into three or more partial search conditions. Also in this case, the online shopping mall server 4 searches for items for sale for each partial search condition. The number of items for sale included in an extracted combination is the same as the number of the partial search conditions. When the online shopping mall server 4 further divides a partial search condition, the online shopping mall server 4 may divide the partial search condition into three or more partial search conditions.

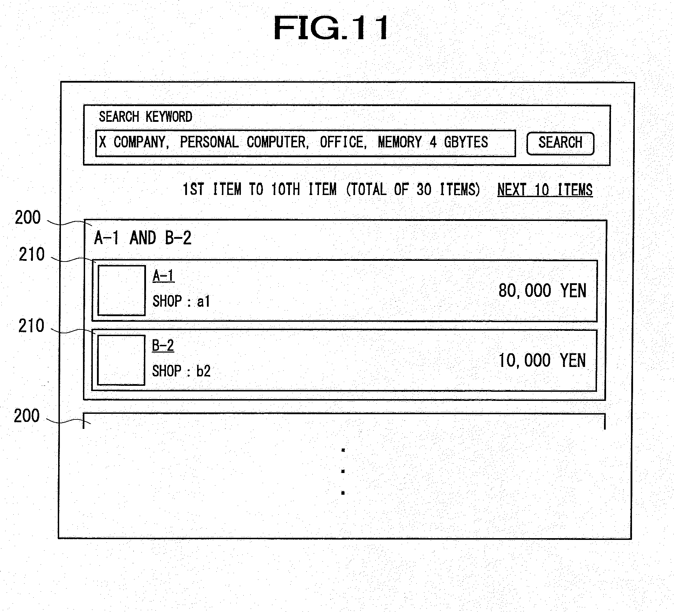

FIG. 11 is a diagram showing a display example of a sale item search result page. When combinations of items for sale are found, for example, as shown in FIG. 11, a sale item search result page is displayed. In the sale item search result page, combination display areas 200 are displayed. The combination display area 200 is displayed for each combination that is found. FIG. 11 is a display example of a combination display area 200 corresponding to items of sale A-1 and B2.

In the combination display area 200, a plurality of sale item display areas 210 are displayed. In the sale item display area 210, information related to an item for sale which is included in a combination. The sale item display area 210 is displayed for each of items for sale. Specifically, in the sale item information display area 210, for example, a sale item name, an image of the item for sale, a sale item price, a shop name of a shop that sells the item for sale, and the like are displayed.

### 2-3. Configuration of Online Shopping Mall Server

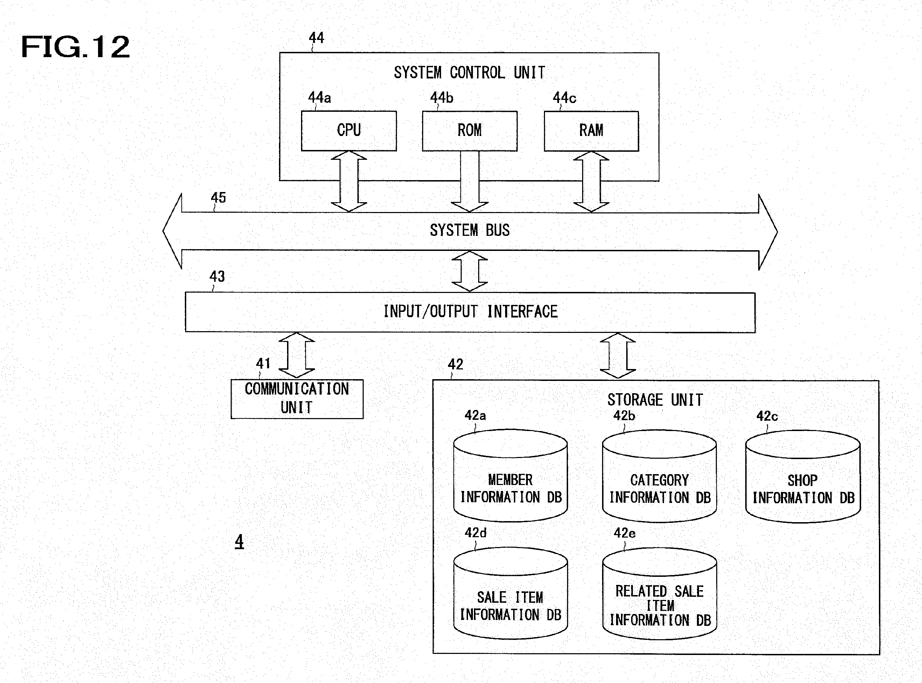

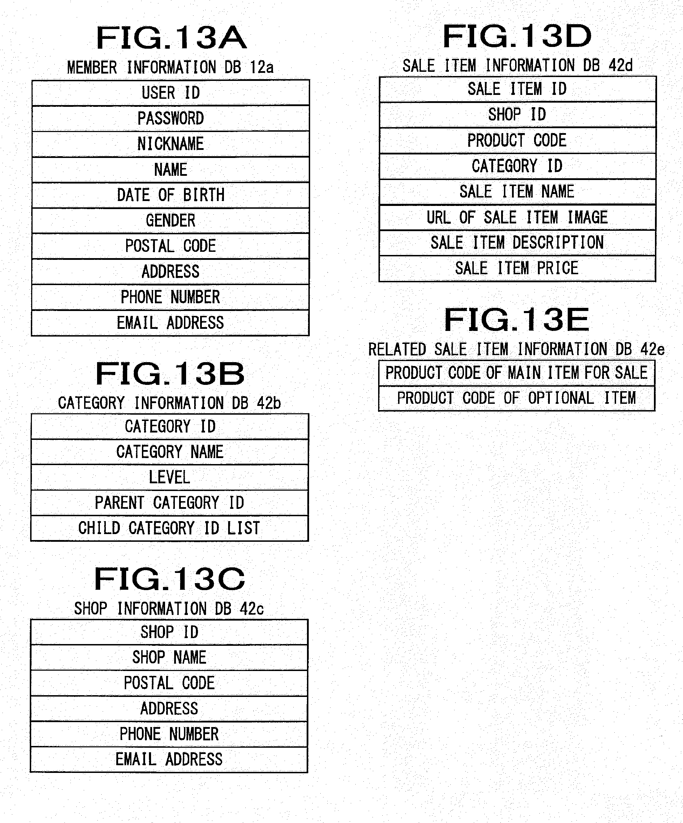

Next, a configuration of the online shopping mall server 4 will be described with reference to FIGS. 12 and 13.

FIG. 12 is a block diagram showing an example of a schematic configuration of the online shopping mall server 4 according to the present embodiment. As shown in FIG. 12, the online shopping mall server 4 includes a communication unit 41, a storage unit 42, an input/output interface 43, and a system control unit 44. The system control unit 44 and the input/output interface 43 are connected through a system bus 45.

The communication unit 41 connects to the network NW and controls communication state with the shop terminal 5 and the user terminal 6.

The storage unit 42 includes, for example, a hard disk drive and the like. In the storage unit 42, databases such as a member information DB 42a, a category information DB 42b, a shop information DB 42c, a sale item information DB 42d, a related sale item information DB 42e are constructed.

FIG. 13A is a diagram showing an example of content registered in the member information DB 42a. In the member information DB 42a, member information related to users registered in the information providing system S2 as a member is registered. Content registered in the member information DB 42a is basically the same as the content registered in the member information DB 12a in the first embodiment.

FIG. 13B is a diagram showing an example of content registered in the category information DB 42b. In the category information DB 42b, category information related to categories of items for sale is registered. Specifically, in the category information DB 42b, attributes of a category such as a category ID, a category name, a level of the category, a parent category ID, a child category ID list are registered in association with each other for each category. For example, the category information is set by an administrator of the online shopping mall.

The categories of items for sale are hierarchically defined by a tree structure. Specifically, each node in the tree structure corresponds to a category. The depth of the node corresponds to a level (a layer) of the category corresponding to the node. The depth of the node is a distance from a node (hereinafter referred to as "root node") located at the root. The greater the value of the level, the deeper the depth of the level is. The smaller the value of the level, the shallower the depth of the level is. The category corresponding to a child node of the root node is a category of level 1. The category of level 1 is the highest category. For each category of level 1, a category corresponding to a child node is defined as the category of level 2. Here, a category C2 corresponding to a child node of a certain category C1 is referred to as a "child category" of the category C1. At this time, the category C1 is referred to as a "parent category" of the category C2. The child category is a range to which similar items for sale belong when the parent category is further divided into a plurality of categories. Therefore, the child category belongs to the parent category.

The category ID is identification information of the category defined by the category information. The parent category ID is a category ID of the parent category of the category defined by the category information. The child category ID list is a list of category IDs of child categories of the category defined by the category information. The child category ID list is set when the category defined by the category information has child categories.

FIG. 13C is a diagram showing an example of content registered in the shop information DB 42c. In the shop information DB 42c, shop information of shops that are open in the online shopping mall is registered. Specifically, in the shop information DB 42c, attributes of a shop, such as a shop ID, a shop name, a postal code, an address, a phone number, an email address, and shop shipping fee information are registered in association with each other for each shop. The shop ID is identification information of the shop. The shop shipping fee information is information indicating shipping fee rules determined by the shop. Basically, the shipping fee rule is determined for each item for sale. However, when the same shop collectively delivers a plurality of items for sale, shipping fee rules of individual items for sale cannot be used. Therefore, shipping fee rules of the entire shop are determined. In the shop shipping fee information, for example, a shipping fee is set for each prefecture to which an item for sale is transferred and each size of item for sale to be delivered.

FIG. 13D is a diagram showing an example of content registered in the sale item information DB 42d. In the sale item information DB 42d, sale item information related to items for sale sold in the online shopping mall is registered. Specifically, in the sale item information DB 42d, attributes of items for sale, such as a sale item ID, a shop ID, a product code, a category ID, a sale item name, a URL (Uniform Resource Locator) of a sale item image, a sale item description, and a sale item price are registered in association with each other for each item for sale sold by a shop.

The sale item ID is identification information of item for sale for the shop to manage the item for sale sold by the shop. The shop ID indicates a shop which sells the item for sale. The product code is a code number to identify the item for sale. The same product code is given to the same item for sale. As an item for sale code, for example, there is JAN code (Japanese Article Number Code). Basically, the sale item ID corresponds to the sale item page on one-on-one basis. Therefore, a plurality of items for sale whose sale item information is different from each other are provided with sale item IDs different from each other even if the product codes of the items for sale are the same. The category ID is a category ID of a category to which the item for sale belongs. Basically, a category ID of a category defined at the lowest level (a category corresponding to a leaf node in the tree structure) is set. In other words, items for sale are divided into the smallest categories. The sale item name is a name of the item for sale given by the shop. Therefore, the sale item name may be different from an official name of the item for sale.

FIG. 13E is a diagram showing an example of content registered in the related sale item information DB 42d. In the related sale item information DB 42d, related sale item information related to a plurality of items for sale in a relationship between a main item for sale and an optional item is registered. Specifically, in the related sale item information DB 42d, a product code of the main item for sale and a product code of the optional item are registered in association with each other for each combination of the main item for sale and the optional item.

Further, the storage unit 42 stores various data such as HTML documents, XML documents, image data, text data, and electronic documents and various setting values set by an administrator or the like.

Further, the storage unit 42 stores various programs such as an operating system, a WWW server program, a DBMS, and an electronic commerce management program. The electronic commerce management program is a program for performing processes such as searching for items for sale and ordering an item for sale. The electronic commerce management program is an example of a search program of the present invention. For example, the various programs may be acquired from another server device or the like through the network NW or may be recorded in a recording medium such as a DVD and read through a drive device.

The input/output interface 43 performs interface processing among the communication unit 41, the storage unit 42, and the system control unit 44.

The system control unit 44 includes a CPU 14a, a ROM (Read Only Memory) 44b, a RAM (Random Access Memory) 44c, and the like. In the system control unit 44, the CPU 44a reads and executes various programs, so that the system control unit 44 functions as a dividing means, a search means, and an extraction means of the present invention. The online shopping mall server 4 may include a plurality of server devices.

### 2-4. Operation of Information Providing System

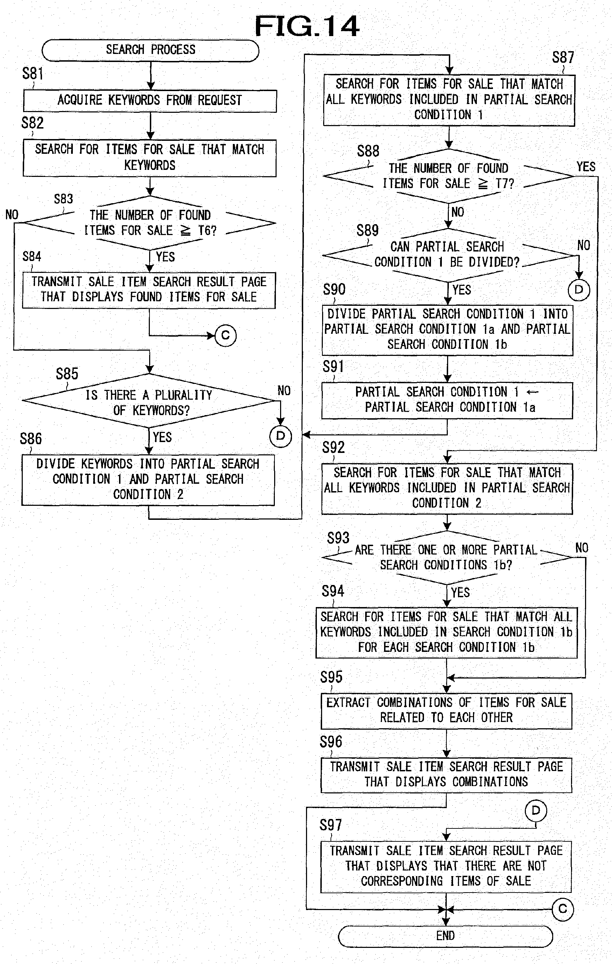

Next, an operation of the information providing system S2 will be described with reference to FIG. 14.

FIG. 14 is a flowchart showing a process example of the search process of the system control unit 44 of the online shopping mall server 4 according to the present embodiment. In the online shopping mall, the user operates the user terminal 6 and specifies one or more keywords. Then, the user terminal 6 transmits a search request to the online shopping mall server 4. The search request includes the specified keywords. The search process is started when the online shopping mall server 4 receives the search request.

As shown in FIG. 14, the system control unit 44 acquires all the specified keywords from the received search request (step S81) . Next, the system control unit 44 searches for items for sale corresponding to all the specified keywords (step S82) . Specifically, the system control unit 44 searches for the sale item information in which at least one of the sale item name and the sale item description includes the specified keyword from among the sale item information registered in the sale item information DB 42d. When a plurality of keywords are specified, the system control unit 44 searches for the sale item information in which, for each of all the keywords, at least one of the sale item name and the sale item description includes a keyword.

After completing the process of step S82, the system control unit 44 determines whether or not the number of found items for sale is greater than or equal to T6 (step S83). At this time, if the system control unit 44 determines that the number of the found items for sale is greater than or equal to T6 (step S83: YES), the system control unit 44 transmits a sale item search result page that displays a list of the found items for sale to the user terminal 6 that is the transmission source of the search request (step S84). After completing this process, the system control unit 44 ends the search process.

Incidentally, when T6 has been set to a value greater than one and one or more items for sale are found which match all of the plurality of keywords specified by the user, the system control unit 14 may transmit a sale item search result page that displays a list of the found items for sale to the user terminal 6.

On the other hand, the system control unit 44 determines that the number of the found items for sale is smaller than T6 (step S83: NO), the system control unit 44 determines whether or not a plurality of keywords are specified (step S85). At this time, if the system control unit 44 determines that one keyword is specified (step S85: NO), the system control unit 44 transmits a sale item search result page that displays that there are not corresponding items for sale to the user terminal 6 that is the transmission source of the search request (step S97). After completing this process, the system control unit 44 ends the search process.

On the other hand, if the system control unit 44 determines that a plurality of keywords are specified (step S85: YES), as a dividing means, the system control unit 44 divides the plurality of specified keywords into a partial search condition 1 and a partial search condition 2 (step S86). Specifically, the system control unit 44 acquires the number of items for sale that are found by each of the plurality of specified keywords. At this time, the system control unit 44 may actually search for items for sale. The system control unit 44 may periodically search for items for sale by various keywords and stores the number of found items for sale in the storage unit 42 in association with the keyword. The system control unit 44 may acquire the number of found items for sale from the storage unit 42. The system control unit 44 includes one keyword by which the smallest number of items for sale are found in the partial search condition 2 and includes the other keywords in the partial search condition 1.

After completing the process of step S86, as a search means, the system control unit 44 searches for items for sale that match all the keywords included in the partial search condition 1 (step S87). The search method in this case is basically the same as that in step S82. Next, the system control unit 44 determines whether or not the number of found items for sale is greater than or equal to T7 (step S88). At this time, if the system control unit 44 determines that the number of found items for sale is smaller than T7 (step S88: NO), the system control unit 44 determines whether or not the partial search condition 1 can be further divided (step S89). For example, it may be determined that the partial search condition 1 can be divided until the number of keywords included in the partial search condition 1 becomes a predetermined number. Or, for example, it may be determined that the maximum number of times the partial search condition 1 can be divided is set in advance and the partial search condition 1 can be divided until the number of times reaches the maximum number of times. If the system control unit 44 determines that the partial search condition 1 can be further divided (step S89: YES), as a dividing means, the system control unit 44 divides the partial search condition 1 into a partial search condition 1a and a partial search condition 1b (step S90). At this time, the system control unit 44 includes one keyword by which the smallest number of items for sale are found among the keywords included in the partial search condition 1 in the partial search condition 1b and includes the other keywords in the partial search condition 1a. After dividing the partial search condition 1, the system control unit 44 defines the partial search condition 1a as the latest partial search condition 1 (step S91). Next, the system control unit 44 proceeds to step S87 and searches for items for sale corresponding to all the keywords included in the latest partial search condition 1.

The system control unit 44 repeats the search using the partial search condition 1 and the division of the partial search condition 1 until T7 or more items for sale are found or the division becomes impossible by repeating the processes of steps S87 to S91. In step S89, if the system control unit 44 determines that the partial search condition 1 cannot be further divided (step S89: NO), the system control unit 44 proceeds to step S97. In this case, the system control unit 44 may newly search for a plurality of keywords and proceed to step S87. In this case, the system control unit 44 divides the plurality of keywords by a method different from the division method in step S86. For example, the system control unit 44 may divide the plurality of keywords into a partial search condition 2 including two keywords and a partial search condition 1 including the other keywords.

In step S88, if the system control unit 44 determines that the number of found items for sale is greater than or equal to T7 (step S88: YES), as a search means, the system control unit 44 searches for items for sale that match all the keywords included in the partial search condition 2 (step S92). The search method in this case is basically the same as that in step S82. Next, the system control unit 44 determines whether or not there is one or more partial search conditions 1b (step S93) . At this time, if the system control unit 44 determines that there is one or more partial search conditions 1b (step S93: YES), as a search means, the system control unit 44 searches for items for sale that match all the keywords included in the partial search condition 1b for each partial search condition 1b (step S94). The search method in this case is basically the same as that in step S82.

If the system control unit 44 determines that there is no partial search condition 1b (step S93: NO) or when the system control unit 44 completes the process of step S94, as an extraction means, the system control unit 44 extracts combinations of items for sale related to each other from among combinations of any one of items for sale included in a corresponding sale item set that is found by using the partial search condition 1 and any one of items for sale included in a corresponding sale item set that is found by using the partial search condition 2 (step S95). Here, if the system control unit 44 searches for items for sale by using the partial search condition 1b, the system control unit 44 extracts combinations of items for sale related to each other from among combinations of any one of items for sale included in a corresponding sale item set that is found by using the partial search condition 1, any one of items for sale included in a corresponding sale item set that is found by using the partial search condition 2, and any one of items for sale included in a corresponding sale item set that is found by using the partial search condition 1b. Specifically, when the system control unit 44 extracts a plurality of items for sale in the same category, the system control unit 44 acquires a category ID from the sale item information of each item for sale. The system control unit 44 may identify a plurality of items for sale whose category IDs are the same between the corresponding sale item sets. In this case, whether or not the categories are the same is determined at the lowest level. The system control unit 44 may extract a plurality of items for sale in the same category at a level higher than the lowest level. This is because if whether or not the categories are the same is determined at a low level, a range of items for sale that belong to the same category may be small. The system control unit 44 can acquire a category ID of a category at a level higher than the lowest level for each item for sale on the basis of the category information registered in the category information DB 42b. For example, when the system control unit 44 extracts a plurality of items for sale which are sold by the same shop, the system control unit 44 acquires a shop ID from the sale item information of each item for sale. Then, the system control unit 44 identifies a plurality of items for sale whose shop IDs are the same between the corresponding sale item sets. For example, when the system control unit 44 extracts a plurality of items for sale in a relationship between a main item for sale and an optional item, the system control unit 44 acquires a product code from the sale item information of each item for sale. Then, the system control unit 44 identifies a plurality of items for sale whose product codes are registered in association with each other, in the related sale item information DB 44e, between the corresponding sale item sets.

After completing the process of step S95, the system control unit 44 transmits an HTML document of a sale item search result page that displays a list of the extracted combinations to the user terminal 6 that is the transmission source of the search request (step S96). Specifically, the system control unit 44 generates data for displaying the sale item information display area 210 based on the sale item name, the URL of the sale item image, the sale item price, the sale item ID, and the like that are included in the sale item information of each item for sale that is included in the combinations. Next, the system control unit 44 generates an HTML document including the data for displaying the sale item information display area 210. Then, the system control unit 44 transmits the generated HTML document. After completing this process, the system control unit 44 ends the search process. For example, as shown in FIG. 11, the user terminal 6 displays the sale item search result page based on the HTML document received from the online shopping mall server 4.

When T6 is set to a value greater than one, there is a case in which combinations of items for sales are searched for although one or more items for sale are found which match all of the plurality of keywords specified by the user. In this case, the system control unit 14 may generate an html document of sale item search result page so that both of information of the found items for sale and information of found combinations are displayed.

In step S91, the system control unit 44 may determine the partial search condition 1a to be the latest partial search condition 1 and integrate the partial search condition 1b with the partial search condition 2 generated by the division in step S86.

As described above, according to the present embodiment, the system control unit 44 of the online shopping mall server 4 divides a plurality of keywords specified as a search condition into partial search conditions 1 and 2, each of which includes at least one keyword, searches for items for sale that match all the keywords included in a partial search condition for each partial search condition and items for sale that match all the keywords included in the partial search conditions, and extracts combinations of items for sale that have a predetermined relationship from among combinations of any one of items for sale found by the partial search condition 1 and any one of items for sale found by the partial search condition 2. Therefore, a user can obtain a sufficient search results desired by the user without changing a search condition even when a sufficient number of items for sale do not exist which match all of a plurality of keywords specified as the search condition.

Further, when the result of search for items for sale that match all of the plurality of keywords specified as the search condition is that the number of the found items for sale is smaller than T6, the system control unit 44 divides the plurality of keywords. Therefore, it is possible to prevent an unnecessary search process from being performed while the user can obtain a sufficient number of search results more desirable for the user.

Further, when the number of items for sale found by the partial search condition 1 is smaller than T7, the system control unit 44 divides the partial search condition 1 into the partial search conditions 1a and 1b, searches for items for sale that match all the keywords included in the partial search condition 1a and items for sale that match all the keywords included in the partial search condition 1b, and extracts combinations of items for sale that are related to each other from among combinations of any one of items for sale found by the partial search condition 1a, any one of items for sale found by the partial search condition 1b, and any one of items for sale found by the partial search condition 2. Therefore, each of the partial search conditions 1a and 1b includes a smaller number of keywords than that of the partial search condition 1, so that there is a higher probability of finding items for sale when performing the search by using the partial search conditions 1a and 1b than when performing the search by using the partial search condition 1. Therefore, it is possible to more easily obtain a sufficient number of search results desired by the user.

The system control unit 44 includes one keyword by which the smallest number of items for sale are found among the plurality of keywords specified as the search condition in the partial search condition 2 and includes the keywords that are not included in the partial search condition 2 in the partial search condition 1. Therefore, it is possible to make the partial search condition 1 closer to the specified search condition as much as possible and increase the probability to be able to find items for sale by the partial search condition 1.

In the embodiments described above, the present invention is applied when accommodation facilities or items for sale are searched for as search objects. However, the present invention may be applied to a search for, for example, a facility other than an accommodation facility, a location, a service, a web page, an image, a moving image, a sound, a map, news, a blog, and the like.

In the embodiments described above, the search apparatus of the present invention is applied to a server device in a client-server system. Specifically, a terminal device transmits keywords specified by a user to a server device and the server device performs a search by using the received keywords. However, the present invention may be applied to a stand-alone device. Specifically, the search apparatus of the present invention may directly receive keywords specified by the user, perform a search by using the received keywords, and directly provide information of the advantageous combinations to the user by, for example, displaying a search result.

### Reference Signs List

- 1: Accommodation facility reservation server
- 2: Accommodation facility terminal
- 3: User terminal
- 11: Communication unit
- 12: Storage unit
- 12a: Member information DB
- 12b: Accommodation facility information DB
- 12c: Region information DB 12c
- 12d: Spot information DB
- 12e: Accommodation facility keyword information DB
- 13: Input/output interface
- 14: System control unit
- 14a: CPU
- 14b: ROM
- 14c: RAM
- 15: System bus
- NW: Network
- S1: Information providing system
- 4: Online shopping mall server
- 5: Shop terminal
- 6: User terminal
- 41: Communication unit
- 42: Storage unit
- 42a: Member information DB
- 42b: Shop information DB
- 42c: Category information DB
- 42d: Sale item information DB
- 42e: Related information DB
- 43: Input/output interface
- 44: System control unit
- 44a: CPU
- 44b: ROM
- 44c: RAM
- 45: System bus
- S2: Information providing system

## Claims

1. A search apparatus comprising:
a dividing means that divides a plurality of keywords specified as a search condition into two child search conditions, each of the child search conditions including at least one keyword;
a search means that searches for search objects matching all of the keywords included in a child search condition for each of the child search conditions; and
an extraction means that extracts combinations of search objects having a predetermined relationship to each other from among combinations of any one of search objects found by one of the child search conditions and any one of search objects found by the other of the child search conditions.

2. The search apparatus according to claim 1, wherein
the dividing means divides the plurality of keywords when a result of searching for search objects matching all of the plurality of keywords is that a number of search objects found is smaller than a predetermined first number.

3. The search apparatus according to claim 1 or 2, wherein
the dividing means divides the one of the child search conditions into two grandchild search conditions when a number of search objects found by using the one of the child search conditions is smaller than a predetermined second number,
the search means searches for search objects matching all of the keywords included in a grandchild search condition for each of the grandchild search conditions, and
the extraction means extracts combinations of search objects having a predetermined relationship to each other from among combinations of any one of search objects found by using one of the grandchild search conditions, any one of search objects found by the other of the grandchild search conditions, and any one of search objects found by the other of the child search conditions.

4. The search apparatus according to claim 1 or 2, wherein
the dividing means divides the one of the child search conditions into two grandchild search conditions and integrates one of the grandchild search conditions with the other of the child search conditions when a number of search objects found by the one of the child search conditions is smaller than a predetermined second number,
the search means searches for search objects matching all of the keywords included in the other of the grandchild search conditions and search objects matching all of the keywords included in the other of the child search conditions, and
the extraction means extracts combinations of search objects having a predetermined relationship to each other from among combinations of any one of search objects found by the other of the grandchild search conditions and any one of search objects found by the other of the child search conditions.

5. The search apparatus according to any one of claims 1 to 4, wherein
the dividing means includes one keyword by which the smallest number of search objects are found among the plurality of keywords in the other of the child search conditions and includes the keywords that are not included in the other of the child search conditions in the one of the child search conditions.

6. The search apparatus according to any one of claims 1 to 5, wherein
the dividing means divides the plurality of keywords specified for searching for facilities into a first child search condition that is used for searching for facilities and a second child search condition that is not used for searching for facilities,
the search means searches for facilities matching all of the keywords included in the first child search condition and regions matching all of the keywords included in the second child search condition, and
the extraction means extracts combinations of a facility and a region that have the relationship to each other from among combinations of any one of facilities found by the first child search condition and any one of regions found by the second child search condition.

7. The search apparatus according to claim 6, wherein
the dividing means determines for each of the plurality of keywords whether or not the keyword is a keyword related to a provision object that is provided by a facility, includes a keyword determined to be related to the provision object in the first search child condition and includes a keyword determined not to be related to the provision object in the second search child condition.

8. The search apparatus according to claim 6 or 7, wherein
when a location of any facility of facilities found by the first child search condition is within a predetermined range with respect to any region of regions found by the second child search condition, the extraction means extracts the facility and the region as a combination of a facility and a region that have the relationship to each other.

9. The search apparatus according to any one of claims 6 to 8, further comprising
change means that, when a number of regions found by the second child search condition is smaller than a predetermined third number, makes sizes of regions, to be searched, larger than when the regions the number of which is smaller than the third number was found,
wherein the search means searches regions whose sizes are changed by the change means for regions matching all of the keywords included in the second child search condition, and
the extraction means extracts combinations of a facility and a region that have the relationship to each other from among combinations of any one of facilities found by the first child search condition and any one of regions found by the second child search condition from among regions whose sizes are changed by the change means.

10. A search method performed by a search apparatus, the search method comprising:
a dividing step of dividing a plurality of keywords specified as a search condition into two child search conditions, each of the child search conditions including at least one keyword;
a search step of searching for search objects matching all of the keywords included in a child search condition for each of the child search conditions; and
an extraction step of extracting combinations of search objects having a predetermined relationship to each other from among combinations of any one of search objects found by one of the child search conditions and any one of search objects found by the other of the child search conditions.

11. A search program that causes a computer included in a search apparatus to function as:
a dividing means that divides a plurality of keywords specified as a search condition into two child search conditions, each of the child search conditions including at least one keyword;
a search means that searches for search objects matching all of the keywords included in a child search condition for each of the child search conditions; and
an extraction means that extracts combinations of search objects having a predetermined relationship to each other from among combinations of any one of search objects found by one of the child search conditions and any one of search objects found by the other of the child search conditions.

12. A recording medium in which a search program is computer-readably recorded, the search program causing a computer included in a search apparatus to function as:
a dividing means that divides a plurality of keywords specified as a search condition into two child search conditions, each of the child search conditions including at least one keyword;
a search means that searches for search objects matching all of the keywords included in a child search condition for each of the child search conditions; and
an extraction means that extracts combinations of search objects having a predetermined relationship to each other from among combinations of any one of search objects found by one of the child search conditions and any one of search objects found by the other of the child search conditions.
